# EUROPEAN PATENT APPLICATION

(11) **EP 4 328 741 A1**
(43) Date of publication of application: **28.02.2024**
(21) Application number: 22794997.1
(22) Date of filing: 28.04.2022
(51) Int. Cl.: G06F 9/30, G06F 8/65, G06F 11/07, G05B 19/042

(54) **CONTROL METHOD AND APPARATUS OF VEHICLE-MOUNTED CONTROL SYSTEM, DEVICE, AND STORAGE MEDIUM**

(30) Priority: 29.04.2021 CN 202110478479; 29.04.2021 CN 202110478478; 29.04.2021 CN 202110478476; 29.04.2021 CN 202110478840
(71) Applicant: Human Horizons (Shanghai) Cloud Computing Technology Co., Ltd., Shanghai 201114 (CN)
(72) Inventor: LI, Qian, Shanghai 201100 (CN); XU, Chao, Shanghai 201100 (CN)
(74) Representative: Meyer, Thorsten
(86) International application number: PCT/CN2022/089963
(87) International publication number: WO 2022/228527

(57) **Abstract**

The present invention discloses a control method, apparatus, device, and storage medium for a vehicle-mounted control system. The method includes: receiving, by the vehicle-mounted control system, a vehicle control instruction block combination obtained through a user's operation on a vehicle control instruction block; wherein, the vehicle control instruction block combination is consist of at least one vehicle control instruction block, each of the vehicle control instruction blocks includes a functional parameter and a user-set parameter; converting, by the vehicle-mounted control system, the vehicle control instruction block combination into a vehicle control instruction according to a preset first conversion relationship. The control method, apparatus, device and storage medium for a vehicle-mounted control system provided by the embodiments of the present invention can lower the barrier to program vehicle control instructions, greatly facilitating users in independently creating vehicle control instructions according to their preferences, enhancing the intelligence level of vehicle, and consequently enhancing the user experience.

## Description

### FIELD OF THE INVENTION

The present invention relates to the field of vehicle technologies, particularly to a control method, apparatus, device, and storage medium for a vehicle-mounted control system.

### BACKGROUND OF THE INVENTION

In existing vehicle control systems (vehicle-mounted control systems), vehicle control instructions are written by developers in advance. Users can only control the vehicle by invoking these vehicle control instructions or by adjusting the parameters of the vehicle control instructions after invoking them, and cannot write their own vehicle control instructions based on their preferences. Furthermore, existing vehicle control instructions are written in specific computer languages. For users who haven't systematically learned these computer languages, even with the availability of a development environment, the difficulty of writing vehicle control instructions remains very high, and the efficiency of writing is low.

### SUMMARY OF THE INVENTION

The present invention provides a control method, apparatus, device and storage medium for a vehicle-mounted control system to address the technical challenge of users having difficulty in writing vehicle control instructions according to their preferences. Embodiments of the present invention can lower the barrier to programming vehicle control instructions, greatly facilitating users in independently creating vehicle control instructions according to their preferences, enhancing the intelligence level of vehicle, and consequently enhancing the user experience.

To address the above technical issue, in a first aspect, an embodiment of the present invention provides an control method for a vehicle-mounted control system, the method includes:
receiving, by the vehicle-mounted control system, a vehicle control instruction block combination obtained through a user's operation on a vehicle control instruction block; wherein, the vehicle control instruction block combination is consist of at least one vehicle control instruction block, each of the vehicle control instruction blocks includes a functional parameter and a user-set parameter;
converting, by the vehicle-mounted control system, the vehicle control instruction block combination into a vehicle control instruction according to a preset first conversion relationship.

As one of the preferred solutions, before the user' operation on the vehicle control instruction block, the method further includes:
downloading, by the vehicle-mounted control system, a vehicle control instruction block software package based on OTA technology;
processing, by the vehicle-mounted control system, the vehicle control instruction block software package to obtain a number of the vehicle control instruction blocks for the user to operate.

As one of the preferred solutions, the process of downloading, by the vehicle-mounted control system, a vehicle control instruction block software package based on OTA technology, specifically includes:
sending, by the vehicle-mounted control system, a download request for the vehicle control instruction block software package to a vehicle server;
receiving, by the vehicle-mounted control system, version options for the vehicle control instruction block software package sent by the vehicle server according to the download request;
sending, by the vehicle-mounted control system, version information of a target version selected from the version options by the user to the vehicle server;
receiving, by the vehicle-mounted control system, a download address of a target vehicle control instruction block software package sent by the vehicle server according to the version information of the target version;
downloading, by the vehicle-mounted control system, the target vehicle control instruction block software package according to the download address based on OTA technology.

As one of the preferred solutions, the download request includes a device identifier of the vehicle, current version information of the vehicle control instruction block software package of the vehicle, and version authentication information corresponding to the current version information;
wherein the device identifier, the current version information, and the version authentication information corresponding to the current version information are used for the vehicle server to authenticate the download request.

As one of the preferred solutions, after the process of downloading, by the vehicle-mounted control system, the target vehicle control instruction block software package according to the download address, the method further includes:
loading, by the vehicle-mounted control system, the target vehicle control instruction block software package, updating the current version information to the version information of the target vehicle control instruction block software package, and updating the version authentication information corresponding to the current version information to the version authentication information corresponding to the target vehicle control instruction block software package.

As one of the preferred solutions, in a case where a plurality of the download addresses are provided, the process of downloading, by the vehicle-mounted control system, the target vehicle control instruction block software package according to the download address, specifically includes:
receiving, by the vehicle-mounted control system, a download speed of the target vehicle control instruction block software package at a current selected download address;
switching to a different download address to download the target vehicle control instruction block software package when there is an anomaly in the download speed.

As one of the preferred solutions, the process of downloading, by the vehicle-mounted control system, the target vehicle control instruction block software package according to the download address, specifically includes:
downloading, by the vehicle-mounted control system, all program blocks of the target vehicle control instruction block software package according to the download address and a pre-set download order of the program blocks of the target vehicle control instruction block software package.

As one of the preferred solutions, the process of downloading, by the vehicle-mounted control system, all program blocks of the target vehicle control instruction block software package according to the download address and a pre-set download order of the program blocks of the target vehicle control instruction block software package, specifically includes:
downloading, by the vehicle-mounted control system, the program block of the target vehicle control instruction block software package according to the download address and the pre-set download order of the program blocks of the target vehicle control instruction block software package and receiving a download speed of the program block;
choosing a next program block in the download order for downloading when there is an anomaly in the download speed until all the program blocks of the target vehicle control instruction block software package are downloaded.

As one of the preferred solutions, the process of downloading, by the vehicle-mounted control system, the target vehicle control instruction block software package according to the download address, specifically includes:
verifying, by the vehicle-mounted control system, validity of the download address;
downloading the target vehicle control instruction block software package when the download address is valid.

As one of the preferred solutions, the target vehicle control instruction block software package is encrypted, in this case after the process of downloading, by the vehicle-mounted control system, the target vehicle control instruction block software package, the method further includes:
decrypting, by the vehicle-mounted control system, the target vehicle control instruction block software package to obtain a decrypted target vehicle control instruction block software package;
verifying, by the vehicle-mounted control system, validity of the decrypted target vehicle control instruction block software package;
loading the decrypted target vehicle control instruction block software package when the decrypted target vehicle control instruction block software package is valid.

As one of the preferred solutions, the method further includes:
receiving, by the vehicle server, the user's operation information for the vehicle control instruction block;
storing, by the vehicle server, the operation information.

As one of the preferred solutions, the process of storing, by the vehicle server, the operation information, specifically includes:
checking, by the vehicle server, whether there is an anomaly in the operation information;
storing, by the vehicle server, the operation information on a disk as abnormal operation information if there is an anomaly in the operation information;
storing, by the vehicle server, the operation information on the disk as normal operation information if there is no anomaly in the operation information and recording a storing time.

As one of the preferred solutions, after the process of storing, by the vehicle server, the operation information on a disk as abnormal operation information, the method further includes:
checking, by the vehicle server, an anomaly level of the abnormal operation information;
sending, by the vehicle server, the abnormal operation information to an abnormal operation information processing terminal when the anomaly level meets a preset anomaly level condition.

As one of the preferred solutions, the process of checking, by the vehicle server, whether there is an anomaly in the operation information, specifically includes:
checking, by the vehicle server, whether the vehicle control instruction block is a registered valid vehicle control instruction block;
determining, by the vehicle server, that there is an anomaly in the operation information if the vehicle control instruction block is not a valid vehicle control instruction block;
checking, by the vehicle server, whether a version of the vehicle control instruction block is the current version if the vehicle control instruction block is a valid vehicle control instruction block;
determining, by the vehicle server, that there is an anomaly in the operation information if the version is not the current version;
checking, by the vehicle server, whether a parameter configured in the vehicle control instruction block exceeds a parameter threshold range if the version is the current version;
determining, by the vehicle server, that there is an anomaly in the operation information if the parameter exceeds the parameter threshold range;
determining, by the vehicle server, that there is no anomaly in the operation information if the parameter doesn't exceed the parameter threshold range;

As one of the preferred solutions, the process of storing, by the vehicle server, the operation information on the disk as normal operation information if there is no anomaly in the operation information and recording a storing time, specifically includes:
compressing, by the vehicle server, the operation information through a preset compression algorithm if there is no anomaly in the operation information;
storing, by the vehicle server, the compressed operation information on the disk as normal operation information and recording the storing time.

As one of the preferred solutions, the method further includes:
checking, by the vehicle server, whether a usage rate of the disk is greater than a usage rate threshold;
deleting, by the vehicle server, the normal operation information according to the storing time when the usage rate is greater than the usage rate threshold.

As one of the preferred solutions, the anomaly level dynamically increases and decreases according to a frequency of occurrence of a type of the abnormal operation information.

As one of the preferred solutions, the process of sending, by the vehicle server, the abnormal operation information to an abnormal operation information processing terminal, specifically includes:
encrypting, by the vehicle server, the abnormal operation information and setting a permission level, and then sending the abnormal operation information to the abnormal operation information processing terminal.

As one of the preferred embodiment, the process of obtaining a vehicle control instruction block combination through a user's operation on a vehicle control instruction block, specifically includes:
checking, by the vehicle-mounted control system, in response to a user-issued operational instruction, whether the vehicle control instruction block meets a predefined vehicle control instruction block operational condition; the vehicle control instruction block operational condition includes: the vehicle control instruction block has a concatenatable attribute or a splittable attribute; the operational instruction includes: a concatenating instruction or a splitting instruction;
performing a control operation of the vehicle control instruction block corresponding to the operational instruction to obtain the vehicle control instruction block combination if the vehicle control instruction block meets the operational condition; the control operation includes accordingly: concatenating or splitting the vehicle control instruction block that meets the vehicle control instruction block operational condition.

As one of the preferred solutions, in a case where the operational instruction includes the concatenating instruction, and a first vehicle control instruction block and a second vehicle control instruction block have the concatenatable attribute;
the process of performing a control operation of the vehicle control instruction block corresponding to the operational instruction includes:
providing a ready-to-concatenate prompt when the first vehicle control instruction block and the second vehicle control instruction block meet the vehicle control instruction block operational condition; and
concatenating the first vehicle control instruction block and the second vehicle control instruction block into a third vehicle control instruction block when a state of the first vehicle control instruction block is changed from a selected state to an unselected state.

As one of the preferred solutions, the method further includes:
controlling the second vehicle control instruction block to move along with the first vehicle control instruction block when the first vehicle control instruction block within the third vehicle control instruction block is selected to move; wherein in the third vehicle control instruction block, the first vehicle control instruction block is a front vehicle control instruction block, the second vehicle control instruction block is a back vehicle control instruction block.

As one of the preferred solutions, the method further includes:
splitting the third vehicle control instruction block into the first vehicle control instruction block and the second vehicle control instruction block when the second vehicle control instruction block within the third vehicle control instruction block is selected to move, and controlling the second vehicle control instruction block to move separately.

As one of the preferred solutions, the method further includes:
receiving, by the vehicle-mounted control system, a first execution time point of the first vehicle control instruction block and a second execution time point of the second vehicle control instruction block within the third vehicle control instruction block; converting the first vehicle control instruction block into a first vehicle control instruction fragment and converting the second vehicle control instruction block into a second vehicle control instruction fragment, concatenating the first vehicle control instruction fragment and the second vehicle control instruction fragment in a sequential order based on a sequential execution order of the first execution time point and the second execution time point to obtain the vehicle control instruction.

As one of the preferred solutions, the method further includes:
receiving, by the vehicle-mounted control system, a first execution time point of the first vehicle control instruction block and a second execution time point of the second vehicle control instruction block within the third vehicle control instruction block; converting the first vehicle control instruction block into a first vehicle control instruction fragment and converting the second vehicle control instruction block into a second vehicle control instruction fragment, concatenating the first vehicle control instruction fragment and the second vehicle control instruction fragment in a reverse order based on a sequential execution order of the first execution time point and the second execution time point to obtain the vehicle control instruction.

As one of the preferred solutions, the method further includes:
receiving, by the vehicle-mounted control system, the first vehicle control instruction block and the second vehicle control instruction block within the third vehicle control instruction block, converting the first vehicle control instruction block into a first vehicle control instruction fragment and converting the second vehicle control instruction block into a second vehicle control instruction fragment, concatenating the first vehicle control instruction fragment and the second vehicle control instruction fragment in a random order to obtain the vehicle control instruction.

As one of the preferred solutions, the method further includes:
receiving, by the vehicle-mounted control system, a first execution time point of the first vehicle control instruction block and a second execution time point of the second vehicle control instruction block within the third vehicle control instruction block; converting the first vehicle control instruction block into a first simulation operational instruction fragment and converting the second vehicle control instruction block into a second simulation operational instruction fragment, concatenating the first simulation operational instruction fragment and the second simulation operational instruction fragment in a sequential order based on a sequential execution order of the first execution time point and the second execution time point to obtain the simulation operational instruction, and rendering the simulation operational instruction through a preset vehicle model to obtain a rendering result, and then presenting the rendering result.

As one of the preferred solutions, the method further includes:
receiving, by the vehicle-mounted control system, a first execution time point of the first vehicle control instruction block and a second execution time point of the second vehicle control instruction block within the third vehicle control instruction block; converting the first vehicle control instruction block into a first simulation operational instruction fragment and converting the second vehicle control instruction block into a second simulation operational instruction fragment, concatenating the first simulation operational instruction fragment and the second simulation operational instruction fragment in a reverse order based on a sequential execution order of the first execution time point and the second execution time point to obtain the simulation operational instruction, and rendering the simulation operational instruction through a preset vehicle model to obtain a rendering result, and then presenting the rendering result.

As one of the preferred solutions, the method further includes:
receiving, by the vehicle-mounted control system, the first vehicle control instruction block and the second vehicle control instruction block within the third vehicle control instruction block, converting the first vehicle control instruction block into a first simulation operational instruction fragment and converting the second vehicle control instruction block into a second simulation operational instruction fragment; concatenating the first simulation operational instruction fragment and the second simulation operational instruction fragment in a random order to obtain the simulation operational instruction, and rendering the simulation operational instruction through a preset vehicle model to obtain a rendering result, and then presenting the rendering result.

As one of the preferred solutions, the method further includes:
during converting the third vehicle control instruction block, skipping, by the vehicle-mounted control system, the conversion of the first vehicle control instruction block if the first vehicle control instruction block has a disabled attribute, skipping the conversion of the second vehicle control instruction block if the second vehicle control instruction block has a disabled attribute.

As one of the preferred solutions, the process of converting, by the vehicle-mounted control system, the vehicle control instruction block combination into a vehicle control instruction according to a preset first conversion relationship, specifically includes:
extracting each vehicle control instruction block from the vehicle control instruction block combination, converting each of the vehicle control instruction blocks into a vehicle control instruction fragment according to the preset first conversion relationship, concatenating all the vehicle control instruction fragments to obtain the vehicle control instruction.

As one of the preferred solutions, the preset first conversion relationship includes:
extracting each vehicle control instruction block one by one according to a sequential combination order of the vehicle control instruction blocks within the vehicle control instruction block combination;
concatenating all the vehicle control instruction fragments one by one according to the sequential combination order.

As one of the preferred solutions, the preset first conversion relationship includes:
extracting each vehicle control instruction block one by one according to a sequential order of execution timings of the vehicle control instruction blocks within the vehicle control instruction block combination;
concatenating all the vehicle control instruction fragments one by one according to the sequential order of execution timings.

As one of the preferred solutions, the method further includes:
loading, by the vehicle-mounted control system, the vehicle control instruction into a local process of the vehicle-mounted control system.

As one of the preferred solutions, the method further includes:
receiving, by the vehicle-mounted control system, device state information and environment information of a controlled component of the vehicle;
controlling the controlled component of the vehicle according to the vehicle control instruction when the device state information and the environment information are normal information.

As one of the preferred solutions, the method further includes:
receiving, by the vehicle-mounted control system, an operating state of the controlled component of the vehicle;
pushing vehicle control instruction error information when the operating state does not meet a target operating state indicated by the instruction block combination.

As one of the preferred solutions, the method further includes:
converting, by the vehicle-mounted control system, the instruction block combination into a simulation operational instruction according to a preset second conversion relationship;
loading, by the vehicle-mounted control system, the simulation operational instruction into a local process of the vehicle-mounted control system, and rendering the simulation operational instruction using a preset vehicle model to obtain a rendering result;
presenting the rendering result.

As one of the preferred solutions, the process of converting, by the vehicle-mounted control system, the instruction block combination into a simulation operational instruction according to a preset second conversion relationship, specifically includes:
extracting each instruction block from the instruction block combination, converting each of the instruction blocks into a simulation operational instruction fragment according to the preset second conversion relationship, concatenating all the simulation operational instruction fragments to obtain the simulation operational instruction.

As one of the preferred solutions, the preset second conversion relationship includes:
extracting each instruction block one by one according to a sequential combination order of the instruction blocks within the instruction block combination;
concatenating all the simulation operation instruction fragments one by one according to the sequential combination order.

As one of the preferred solutions, the preset second conversion relationship includes:
extracting each instruction block one by one according to a sequential order of execution timings of the instruction blocks within the instruction block combination;
concatenating all the simulation operation instruction fragments one by one according to the sequential order of execution timings.

As one of the preferred solutions, the vehicle model is a 3D vehicle model.

As one of the preferred solutions, the method further includes:
pushing simulation operational instruction error information when the rendering result does not meet an expected rendering result indicated by the instruction block combination.

In a second aspect, an embodiment of the present invention provides a control apparatus for a vehicle-mounted control system, the apparatus includes:
a vehicle control instruction block combination receiving module, configured to receive a vehicle control instruction block combination obtained through a user's operation on a vehicle control instruction block; wherein the vehicle control instruction block combination is consist of at least one vehicle control instruction block, each of the vehicle control instruction blocks includes a functional parameter and a user-set parameter;
a first converting module, configured to convert the vehicle control instruction block combination into a vehicle control instruction according to a preset first conversion relationship.

In a third aspect, an embodiment of the present invention provides a vehicle server, including:
a memory, configured to store a computer program;
a processor, configured to execute the computer program;
wherein when executing the computer program, the processor implements the control method for a vehicle-mounted control system as described above.

In a fourth aspect, an embodiment of the present invention provides a service system, the service system includes a vehicle server, a TSP, and a first vehicle end processor; wherein
the first vehicle end processor is configured to receive a vehicle control instruction block combination obtained through a user's operation on a vehicle control instruction block, convert the vehicle control instruction block combination into a vehicle control instruction according to a preset first conversion relationship, load the vehicle control instruction into a local process of a vehicle-mounted control system, upload the vehicle control instruction block combination and the vehicle control instruction to the vehicle server; wherein the vehicle control instruction block combination is consist of at least one vehicle control instruction block, each of the vehicle control instruction blocks includes a functional parameter and a user-set parameter;
the vehicle server is configured to receive the vehicle control instruction block combination and the vehicle control instruction, verify the vehicle control instruction block combination and the vehicle control instruction, and issue a verification passed result to the first vehicle end processor via the TSP when the verification is passed.

As one of the preferred solutions, the service system further includes a second vehicle end processor;
the vehicle server is further configured to issue the instruction block combination and the vehicle control instruction to the second vehicle end processor via the TSP when the verification is passed.

In a fifth aspect, an embodiment of the present invention provides a terminal device, including a memory, a processor, and a computer program stored in the memory and executable on the processor; when executing the computer program, the processor implements the control method for a vehicle-mounted control system as described above.

In a sixth aspect, an embodiment of the present invention provides a vehicle, the vehicle includes the terminal device as described above.

In a seventh aspect, an embodiment of the present invention provides a computer-readable storage medium, the computer-readable storage medium stores a computer program, wherein when the computer program runs, a device in which the computer-readable storage medium is located is controlled to perform the control method for a vehicle-mounted control system as described above.

Compared with the prior art, the beneficial effects of the embodiments of the present invention include at least one of the following points. Provide users with instruction blocks, enabling the users to visually program the vehicle control instruction. By dragging and combining these instruction blocks, users can create a complete vehicle control instruction, reducing the difficulty for users to control the vehicle through independent programming and thus lowering the entry barrier for users to control the vehicle through programming. This not only enhances the user experience, but also enhances the adaptability of vehicle. Moreover, users can create the instruction block combination based on their individual needs or usage habits, allowing for personalized vehicle control. This not only enhances the user experience but also enhances the intelligent level of vehicle control. Meanwhile, users can program through the instruction blocks. This programming method itself is highly extensible, capable of accommodating the creative visions of different users, further advancing the intelligent level of vehicle control and the user experience.

### BRIEF DESCRIPTION OF THE DRAWINGS

FIG. 1 is a schematic flowchart of a control method for a vehicle-mounted control system according to an embodiment of the present invention.
FIG. 2 is a schematic diagram of a structure of a control apparatus for a vehicle-mounted control system according to an embodiment of the present invention.
FIG. 3 is a structural block diagram of a terminal device according to an embodiment of the present invention.

### Reference signs in the drawings:

11. vehicle control instruction block combination receiving module; 12. first converting module; 21. processor; 22. memory.

### DETAILED DESCRIPTION OF THE INVENTION

Now with reference to the drawings in the embodiments of the present invention, the technical solutions of the embodiments of the present invention will be described clearly and comprehensively. Clearly, the described embodiments are only a part of the embodiments of the present invention, not all of them. These embodiments are provided for the purpose of making the disclosure of the present invention more thorough and comprehensive. Based on the embodiments of the present invention, all other embodiments obtained by those skilled in the art without inventive effort are within the scope of protection of the present invention.

In the description of this application, the terms "first," "second," "third," and the like are used for descriptive purposes only and should not be understood as indicating or implying the relative importance or implying the quantity of the indicated technical features. Thus, features labeled with "first," "second," "third," and the like may explicitly or implicitly include one or more of that feature. In the description of this application, unless otherwise specified, the meaning of "a plurality of is two or more.

In the description of this application, it should be noted that, unless otherwise explicitly defined or limited, the terms "mount," "connect," "couple" should be broadly interpreted. For example, they may refer to fixed connections, detachable connections, or integral connections; they may refer to mechanical connections or electrical connections; they may refer to direct connections or indirect connections through an intermediate medium, and they may refer to communication within two components. The terms "vertical," "horizontal," "left," "right," "up," "down," and similar expressions used in this application are for illustrative purposes and do not indicate or imply that the apparatus or element referred to must have a specific orientation, or be constructed or operated in a specific orientation, and therefore should not be construed as limiting to the present invention. The term "and/or" used in this application includes any or all combinations of one or more of the listed items. For those skilled in the art, the specific meaning of the above terms in this application can be understood according to the specific situation.

In the description of this application, it should be noted that, unless otherwise defined, all the technical and scientific terms used in the present invention have the same meaning as generally understood by those skilled in the art. The terms used in the description of the present invention are for the purpose of describing specific embodiments and are not intended to limit the present invention. For those skilled in the art, the specific meaning of the above terms in this application can be understood according to the specific situation.

It should be noted that, in the embodiments of the present invention, the vehicle control instruction block(also referred to as instruction block) doesn't directly control the controlled components of the vehicle. It first needs to be converted into a vehicle control instruction that is readable to the vehicle according to a preset conversion protocol, then the vehicle control instruction is used to control the controlled components of the vehicle.

It should be noted that in the embodiments of the present invention, instruction blocks can be combined, and this combination is visualizable to the user. As an example, the instruction blocks are designed in the form of building blocks, but the embodiments of the present invention are not limited to this. For example, they can also be designed in the form of patterns, among other possibilities. When the instruction blocks are in the form of building blocks, users can drag and stack these building blocks to concatenate multiple instruction blocks into an instruction block combination (also referred to as vehicle control instruction block combination), that is to say, by concatenating or stacking the instruction blocks, the instruction blocks are combined into a complete instruction block combination (also referred to as vehicle control instruction block combination), thereby achieving coordinated control of multiple controlled components of the vehicle.

In the embodiments of the present invention, some instruction blocks have associated correspondences with the controlled components of the vehicle and the actions they perform. Some instruction blocks are used for conditional check, while some instruction blocks are solely for executing an operation, such as a delay operation, a loop operation, and so on. Wherein, before establishing associated correspondences between the instruction blocks and the controlled components of vehicle, it's necessary to know the states of the controlled components. As an example, the state of the vehicle seat includes moving in the forward, backward, left, right, up or down directions, as well as heating, massaging, and other states on. However, this invention is not limited to these; for example, it can also include expanding, contracting and other states. Therefore, during the process of associating, the first step is to modularize the controlled component and associate it with the instruction block. Then, further associate the controlled component's state with the instruction block's functional parameter. After the association, perform a verification test, if the test result does not meet expectations, it is necessary to perform redesign; if the test result meets the expectations, stores the instruction block into an instruction block database. As an example, a driver's seat of a vehicle is modularized as module 1 and a movement of the module 1 is defined, wherein the movement of the seat may be considered as a motion with respect to a fixed point in forward, backward, left, right, up or down direction, so a transformation matrix may be established to associate the positions before and after movement.

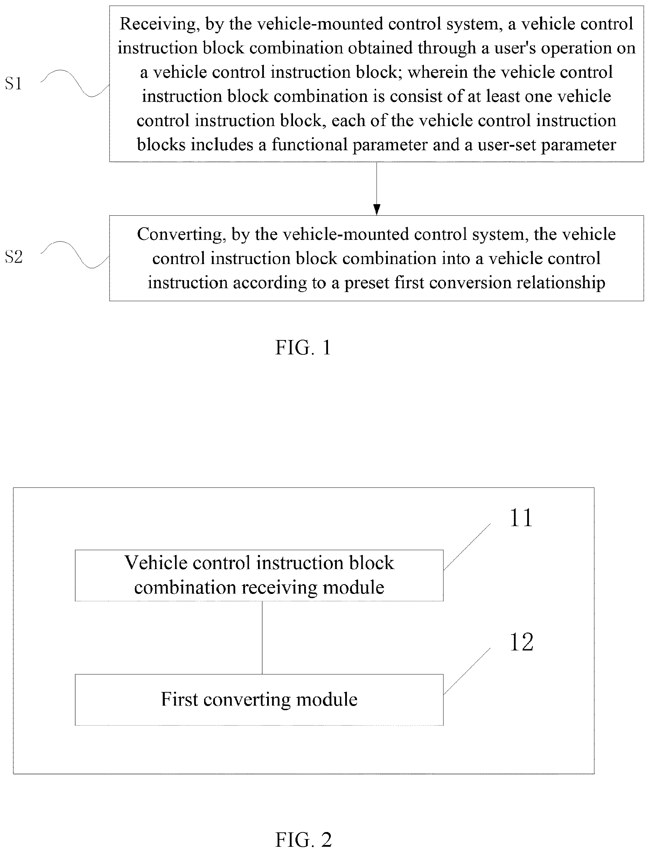

An embodiment of the present invention provides a control method for a vehicle-mounted control system. For details, please refer to FIG. 1. FIG. 1 illustrates a schematic flowchart of an control method for a vehicle-mounted control system according to an embodiment of the present invention. The method includes steps S1-S2:
S1, receiving, by the vehicle-mounted control system, a vehicle control instruction block combination obtained through a user's operation on a vehicle control instruction block; wherein the vehicle control instruction block combination is consist of at least one vehicle control instruction block, each of the vehicle control instruction blocks includes a functional parameter and a user-set parameter;
S2, converting, by the vehicle-mounted control system, the vehicle control instruction block combination into a vehicle control instruction according to a preset first conversion relationship.

In specific implementation, the present embodiment firstly receives the vehicle control instruction block combination obtained through user's operation, wherein, the vehicle control instruction block combination is consist of one or more of the vehicle control instruction block combination. Each of the vehicle control instruction blocks includes a functional parameter. The functional parameter is configured to indicate the corresponding controlled component of the vehicle and an action to perform or a condition to check or an operation to execute. Each of the vehicle control instruction blocks further includes a user-set parameter. As an example, the user-set instruction block 1 is "turn on the air conditioner, set the temperature to 20°C", wherein the "air conditioner" is a controlled component, "turn on" is an action that the air conditioner executes, "20°C" is a use-set target operating temperature. Since the vehicle cannot directly read the source code of the instruction block combination while it is performing an action, it is necessary to translate the source code of the instruction block combination to a vehicle control instruction that is readable to the vehicle according to a preset first conversion relationship.

It should be noted that, user can disable a certain one or a certain number of instruction blocks within the instruction block combination (e.g. by making the instruction blocks in an inactive state). During the conversion, disabled instruction blocks will be skipped automatically, only the instruction blocks that are not disabled will be converted.

The control method for a vehicle control system provided by the present embodiment provides users with instruction blocks, enabling the users to visually program the vehicle control instruction. By dragging and combining these instruction blocks, users can create a complete vehicle control instruction, reducing the difficulty for users to control the vehicle through independent programming and thus lowering the entry barrier for users to control the vehicle through programming. This not only enhances the user experience but also enhances the adaptability of vehicle. Moreover, users can create the instruction block combination based on their individual needs or usage habits, allowing for personalized vehicle control. This not only enhances the user experience but also enhances the intelligent level of vehicle control. Meanwhile, users can program through the instruction blocks. This programming method itself is highly extensible, capable of accommodating the creative visions of different users, further advancing the intelligent level of vehicle control and the user experience.

Furthermore, in the above embodiments, before the user' operation on the vehicle control instruction block, the method further includes:
downloading, by the vehicle-mounted control system, a vehicle control instruction block software package based on OTA technology;
processing, by the vehicle-mounted control system, the vehicle control instruction block software package to obtain a number of the vehicle control instruction blocks for the user to operate.

In the present invention, the download of the vehicle control instruction block software package is used for updating the vehicle control instruction block. The entites for executing this include a vehicle end and a server. The vehicle end communicates with the server through a Tbox. The vehicle end is connected to the Tbox via a CAN bus or Ethenet. The Tbox is connected to the server via a wireless network. However, one skilled in the art should understand that the concept of the present invention can also be applied to other objects requiring updates.

To be more specific, when implementing the present invention, firstly, the vehicle end sends a download request for the vehicle control instruction block software package to the vehicle server. When the vehicle server sends back version options for the vehicle control instruction block software package according to the download request, the vehicle end receives the version options and displays them to the user. When the user selects a target version from the version options and confirms it, version information of the target version is sent to the vehicle server. Then the vehicle server sends an download address of the target vehicle control instruction block software package corresponding to the version information of the target version back to the vehicle end. Finally the vehicle end downloads the target vehicle control instruction block software package according to the download address.

Here, the download request may be initiated by the user or may be automatically sent by the vehicle after the vehicle is connected to the vehicle server; The version options include the latest version and historical versions of the vehicle control instruction block and are displayed to the user in the form of a list. Additionally, in the version options, a brief description of the vehicle control instruction block software package is provided for each version. The download address points to a download server or a CDN (Content Delivery Network).

Furthermore, during OTA transmission, to mitigate the impact of external interference or other factors that may cause download abnormalities or interruptions, the vehicle further supports software rollback, resuming from a break point, retransmitting lost data, and other handling mechanism.

As an example, suppose the software version of the vehicle control instruction block of the vehicle end is Version 1.1.12, the software version of the vehicle control instruction block of the vehicle server includes Version 1.1. 1-Version 1.1.15. When the vehicle end performs version detection, prompts the user if a new version is detected. When the user confirms the download of the software package, sends the download request to the vehicle server and receives the version options sent back from the vehicle server according to the download request. When the user selects the target version and confirms it, for example, the user selects Version 1.1.15 expecting to experience new features, version information of that version is sent to the vehicle server, and the target vehicle control instruction block software package is downloaded according to the download address sent back from the vehicle server. If the user, after using Version 1.1.15 for a while, feels uncomfortable and believes Version 1.1.12 better suits his usage habits, the user can initiate a download request and select Version 1.1.12 from the version options, so as to download the vehicle control instruction block software package with a version number of Version 1.1.12.

Regarding the above-mentioned download of the vehicle control instruction block software package in the embodiments of the present invention, when a user needs to download a software package, the version options of the software package are provided, and after the user selects the target version, the target software package corresponding to that target version is downloaded. This improves the flexibility of version selection during software package downloads and is convenient for the user to select the version of software package to download, allows the user to select the version of the software package based on his usage habits, thereby enhancing the user's vehicle experience.

In a preferred embodiment, the process of downloading the target vehicle control instruction block software package according to the download address, specifically includes:
detecting whether there is a download task for a software package with higher priority;
if there is a download task for a software package with higher priority, downloading the software package with higher priority;
if there is not a download task for a software package with higher priority, detecting whether there is an existing download task for a software package with the same priority;
if there is an existing download task for a software package with the same priority, downloading the software package with the same priority;
if there is not an existing download task for a software package with the same priority, downloading the target vehicle control instruction block software package according to the download address.

As an example, the software package of the vehicle control system is configured with a priority for download. For instance, software packages related to system security may have a higher priority than the vehicle control instruction block software packages. While downloading a vehicle control instruction block software package, if a download task for another software package is detected, a comparison of download priorities will be conducted, and priority sorting will be performed, and the corresponding software packages will be downloaded in order of priority.

The present embodiment downloads the software packages in order of priority, ensuring vehicle stability and enhancing security.

In a preferred embodiment, the download request includes a device identifier of the vehicle, current version information of the vehicle control instruction block software package of the vehicle, and version authentication information corresponding to the current version information;
wherein the device identifier, the current version information, and the version authentication information corresponding to the current version information are used for the vehicle server to authenticate the download request.

To be more specific, the download request includes a series authentication signal used for the vehicle server to authenticate the download request. The series authentication signal is namely the device identifier of the vehicle, the current version information of the vehicle control instruction block software package of the vehicle, and the version authentication information corresponding to the current version information. After receiving the download request, the vehicle server first performs matching on the device identifier, verifies whether the vehicle is a valid vehicle, and seeks out the vehicle control instruction block supported by that vehicle; then performs matching on the current version information, verifies whether the version number of the vehicle control instruction block software package is a valid version number; finally performs authentication on the version authentication information; if the version authentication information matches a stored version authentication information, determines the authentication is passed and then sends the version options of the vehicle control instruction block supported by the vehicle.

Here, each version of the vehicle control instruction block software package is provided with a version authentication information correspondingly.

The present embodiment adds the device identifier, the version information and the version authentication information into the download request, thereby enhancing the confidentiality and security of OTA transmission, avoiding errors in sending software packages that might affect the normal operation of the vehicle.

As an improvement of the above-mentioned embodiment, after the process of downloading the target vehicle control instruction block software package according to the download address, the method further includes:
loading the target vehicle control instruction block software package, updating the current version information to the version information of the target vehicle control instruction block software package, and updating the version authentication information corresponding to the current version information to the version authentication information corresponding to the target vehicle control instruction block software package.

In the present embodiment, the target vehicle control instruction block software package includes the version information of the target vehicle control instruction block software package and the version authentication information corresponding to the target vehicle control instruction block software package, therefore, after updating the version of the vehicle control instruction block, the present embodiment also updates the version authentication information to facilitate authentication during the next software package download.

In a preferred embodiment, a plurality of download addresses are provided; in this case,
the process of downloading the target vehicle control instruction block software package according to the download address, specifically includes:
receiving a download speed of the target vehicle control instruction block software package at a current selected download address;
switching to a different download address to download the target vehicle control instruction block software package when there is an anomaly in the download speed.

In the present embodiment, the vehicle end receives a plurality of download addresses. The vehicle end may randomly choose one from the download addresses as the current selected download address for software package download or choose the one with the least load from the download addresses as the current selected download address for software package download. The present embodiment doesn't impose specific restrictions. During software package download, the download speed of the software package at the current selected address is monitored, and the download speed is checked whether it has remained at a low speed value for a long time. If it has not, the download continues. If it has, an anomaly in the download speed is determined, another download address is chosen from the plurality of download addresses, the current download address is switched to the newly chosen address for the software package download, meanwhile the download speed is constantly monitored.

The present embodiment monitors the download speed of the selected download address during software package download, automatically switches the download address when there is an anomaly, thereby reducing the time for software package download.

In a preferred embodiment, the process of downloading the target vehicle control instruction block software package according to the download address, specifically includes:
downloading all program blocks of the target vehicle control instruction block software package according to the download address and a pre-set download order of the program blocks of the target vehicle control instruction block software package.

In the present embodiment, the target vehicle control instruction block software package has a pre-set download order for the program blocks of the target vehicle control instruction block software package, wherein the download order may be set according to the size of program block, or the functionality of program block. The present embodiment doesn't impose specific restrictions.

As an improvement of the above-mentioned embodiment, the process of downloading all program blocks of the target vehicle control instruction block software package according to the download address and a pre-set download order of the program blocks of the target vehicle control instruction block software package, specifically includes:
downloading the program block of the target vehicle control instruction block software package according to the download address and a pre-set download order of the program blocks of the target vehicle control instruction block software package and receiving a download speed of the program block;
choosing a next program block in the download order for downloading when there is an anomaly in the download speed until all the program blocks of the target vehicle control instruction block software package are downloaded.

Based on the previous embodiment, the present embodiment further monitors the download speed of the program block, checks whether the download speed has remained at a low speed value for a long time (the time and the low speed value are set according to actual circumstances). If it has not, the download continues. If it has, determines that there is an anomaly in the download speed, chooses the next program block in the download order and monitors its download speed. If an anomaly is still there, keeps switching. This process continues until all the program blocks are downloaded.

The present embodiment schedules the program blocks with slower download speed in the latter part of the download process, resulting in a smoother download speed for the entire download process.

In a preferred embodiment, the process of downloading the target vehicle control instruction block software package according to the download address, specifically includes:
verifying validity of the download address;
downloading the target vehicle control instruction block software package when the download address is valid.

In the present embodiment, after receiving the download address from the vehicle server, the vehicle end first verifies the download address, checks whether the download address is a valid address (an address with secure authentication). If it is not, cancels the download. If it is, downloads the target vehicle control instruction block software package.

After receiving the download address, the present embodiment further verifies the download address, thereby enhancing the security of software package download, avoiding the downloading of software packages from unvalid download addresses that might affect the normal operation of the vehicle.

As an improvement of the above-mentioned embodiment, the target vehicle control instruction block software package is encrypted; in this case,
after the process of downloading the target vehicle control instruction block software package, the method further includes:
decrypting the target vehicle control instruction block software package to obtain a decrypted target vehicle control instruction block software package;
verifying validity of the decrypted target vehicle control instruction block software package;
loading the decrypted target vehicle control instruction block software package when the decrypted target vehicle control instruction block software package is valid.

Here, in the process of verifying the validity of the decrypted target vehicle control instruction block software package, the decrypted target vehicle control instruction block software package is matched with version of the vehicle control system. For example, in a case where the vehicle control system used by the user's vehicle hasn't been upgraded for a long time and is of a lower version, and the user chooses the latest version of the target vehicle control instruction block software package, then since the latest version of the target vehicle control software package is designed for the new version of vehicle control system, so the vehicle control system used by the user's vehicle is not compatible with the latest version of the target vehicle control software package (may result in system lag, etc.), therefore the target vehicle control instruction block software package is determined invalid, its loading is canceled, and a notification is prompted to the user.

In the present embodiment, the target vehicle control instruction block software package from the download address is encrypted. After completing the download, the vehicle end first needs to decrypt it to obtain the decrypted target vehicle control instruction block software package and then verifies the decrypted software package, checks whether the vehicle control instruction block is compatible with the current vehicle. If it is not, cancels the loading of the software package. If it is, loads the software package.

After downloading the encrypted software package, the present embodiment further decrypts it and verifies its validity, thus further enhancing the security of software package download.

In the present embodiment, the method further includes:
receiving, by the vehicle server, the user's operation information for the vehicle control instruction block;
storing, by the vehicle server, the operation information.

Furthermore, the process of storing, by the vehicle server, the operation information, specifically includes:
checking, by the vehicle server, whether there is an anomaly in the operation information;
storing, by the vehicle server, the operation information on a disk as abnormal operation information if there is an anomaly in the operation information;
storing, by the vehicle server, the operation information on the disk as normal operation information if there is no anomaly in the operation information and recording a storing time.

Furthermore, after the process of storing, by the vehicle server, the operation information on a disk as abnormal operation information, the method further includes:
checking, by the vehicle server, an anomaly level of the abnormal operation information;
sending, by the vehicle server, the abnormal operation information to an abnormal operation information processing terminal when the anomaly level meets a preset anomaly level condition.

Here, in the process of receiving the user's operation information, what is received is all the user's operation information for the vehicle control instruction block; the abnormal operation information processing terminal is a terminal device owned by an administrator such as a mobile phone or a personal computer. When the administrator receives the abnormal operation information that meets the preset anomaly level, he imports this information into a sandbox system. This enables a 100% restoration of the user's operation scenario at that time, facilitating the quick resolution of anomalies.

To be more specific, when the user operates the vehicle control instruction block, the vehicle server receives the user's operation information for the vehicle control instruction block, checks whether there is an anomaly in the operation information. If it determines that there is an anomaly in the operation information, it stores the operation information on the local disk as abnormal operation information, and further checks the anomaly level of the abnormal operation information. If it determines that the anomaly level of the abnormal operation information meets the preset anomaly level condition, it sends the abnormal operation information directly to the administrator's terminal device via email etc. so that the administrator can promptly address the abnormal operation information.

As an example, the anomaly level includes high-risk anomaly degree, medium anomaly degree, and common anomaly degree; the preset anomaly level condition is: the anomaly level is high-risk anomaly degree. In this case, the present invention sends the operation information directly to the administrator's terminal device only when the anomaly level of the operation information is determined as high-risk anomaly degree.

Furthermore, in the above embodiments, the process of checking, by the vehicle server, whether there is an anomaly in the operation information, specifically includes:
checking, by the vehicle server, whether the vehicle control instruction block is a registered valid vehicle control instruction block;
determining, by the vehicle server, that there is an anomaly in the operation information if the vehicle control instruction block is not a valid vehicle control instruction block;
checking, by the vehicle server, whether a version of the vehicle control instruction block is the current version if the vehicle control instruction block is a valid vehicle control instruction block;
determining, by the vehicle server, that there is an anomaly in the operation information if the version is not the current version;
checking, by the vehicle server, whether a parameter configured in the vehicle control instruction block exceeds a parameter threshold range if the version is the current version;
determining, by the vehicle server, that there is an anomaly in the operation information if the parameter exceeds the parameter threshold range;
determining, by the vehicle server, that there is no anomaly in the operation information if the parameter doesn't exceed the parameter threshold range;

Here, the server (vehicle server) stores all registered vehicle control instruction blocks (including those pre-created by a developer and those created by the user). These vehicle control instruction blocks are recognized by the server as valid vehicle control instruction block, the every vehicle control instruction block has a corresponding version number.

As an example, the user created a new vehicle control instruction block 1 on the vehicle-mounted terminal, this vehicle control instruction block 1 has not been registered in the server, but the user directly uses that vehicle control instruction block 1 to control the vehicle, in this case it can be determined that there is an anomaly in the user's operation information.

As another example, the user selects a version number of Version 1.1.12 for the vehicle control instruction block of the vehicle-mounted terminal, and the user downloads a vehicle control instruction block combination uploaded by another user, however the version number of the vehicle control instruction block used by the vehicle control instruction block combination is Version 1.1.14, and the user directly uses that vehicle control instruction block combination to control his own vehicle, in this case it can be determined that there is an anomaly in the user's operation information.

As another example, the user configures parameters for vehicle control instruction block 2 on the vehicle-mounted terminal, the vehicle control instruction block 2 is used to control the movement of the vehicle's seat, the threshold range of movement is 0~5cm, however the user inputs a parameter of 8 cm which exceeds the threshold range, in this case it can be determined that there is an anomaly in the user's operation information.

In a preferred embodiment, the process of storing, by the vehicle server, the operation information on the disk as normal operation information if there is no anomaly in the operation information and recording a storing time, specifically includes
compressing, by the vehicle server, the operation information through a preset compression algorithm if there is no anomaly in the operation information;
storing, by the vehicle server, the compressed operation information on the disk as normal operation information and recording the storing time.

To be more specific, in order to minimize the occupied space of the disk, the present embodiment further compresses the normal operation information, then stores the compressed operation information on the disk and records the storing time.

In a preferred embodiment, the method further includes:
checking, by the vehicle server, whether a usage rate of the disk is greater than a usage rate threshold;
deleting, by the vehicle server, the normal operation information according to the storing time when the usage rate is greater than the usage rate threshold.

After storing the operation information, the present embodiment monitors the disk usage and compares the usage rate of the disk with the usage rate threshold. If the usage rate is greater than the usage rate threshold, then it is determined that there is limited space on the disk, and a cleanup is required. Then, the normal operation information is deleted according to a "first stored, first deleted" principle until the usage rate of the disk falls below the usage rate threshold or until the disk usage falls below a storage rate threshold. Wherein, the storage rate threshold is less than the usage rate threshold.

In a preferred embodiment, the anomaly level dynamically increases or decreases according to a frequency of occurrence of a type of the abnormal operation information.

In the present embodiment, the anomaly level of the abnormal operation information is not fixed, but is adjusted dynamically according to the frequency of occurrence of the type of the abnormal operation information. This enables the classification of the anomaly type based on the actual circumstances, making it convenient for the administrator to prioritize the more frequently occurring anomaly types for processing.

As an example, the types of the abnormal operation information include: Type 1: the vehicle control instruction block is invalid, Type 2: the vehicle control instruction block does not belong to the current version, Type 3: the vehicle control instruction block's parameter exceeds the threshold. Within a preset time period, if the frequency of Type 1 abnormal operation information exceeds a first frequency threshold, the anomaly level of Type 1 is determined as the high-risk anomaly degree. If it does not exceed the first frequency threshold, the anomaly level of Type 1 is not determined as high-risk anomaly degree, and its level is further determined as either a medium anomaly degree or common anomaly degree according to its frequency. Within a preset time period, if the frequency of Type 2 abnormal operation information exceeds a second frequency threshold, the anomaly level of Type 2 is determined as the high-risk anomaly degree. If it does not exceed the second frequency threshold, the anomaly level of Type 2 is not determined as high-risk anomaly degree, and its level is further determined as either a medium anomaly degree or common anomaly degree according to its frequency. Within a preset time period, if the frequency of Type 3 abnormal operation information exceeds a third frequency threshold, the anomaly level of Type 3 is determined as the high-risk anomaly degree. If it does not exceed the third frequency threshold, the anomaly level of Type 3 is not determined as high-risk anomaly degree, and its level is further determined as either a medium anomaly degree or common anomaly degree according to its frequency.

In a preferred embodiment, the process of sending the abnormal operation information to an abnormal operation information processing terminal, specifically includes:
encrypting the abnormal operation information and setting a permission level, and then sending the abnormal operation information to the abnormal operation information processing terminal.

In the present embodiment, before sending the abnormal operation information to the abnormal operation information processing terminal, the present embodiment encrypts the information and configures its permission levels to prevent the data from being intercepted or tampered, thereby enhancing the security of data transmission.

In the present embodiment, the process of obtaining a vehicle control instruction block combination through a user's operation on a vehicle control instruction block, specifically includes:
checking, by the vehicle-mounted control system, in response to the user-issued operational instruction, whether the vehicle control instruction block meets a predefined vehicle control instruction block operational condition; the vehicle control instruction block operational condition includes: the vehicle control instruction block has a concatenatable attribute or a splittable attribute; the operational instruction includes: a concatenating instruction or a splitting instruction;
performing a control operation of the vehicle control instruction block corresponding to the operational instruction to obtain the vehicle control instruction block combination if the vehicle control instruction block meets the operational condition; the control operation includes accordingly: concatenating or splitting the vehicle control instruction block that meets the vehicle control instruction block operational condition.

It should be noted that, in the present invention, some vehicle control instruction blocks have associated correspondences with the controlled components of the vehicle and the actions they perform, such as opening the front door, closing the front door and so on. Some vehicle control instruction blocks are used for conditional check, such as gear shifting and so on, while some vehicle control instruction blocks are solely for executing an operation, such as a delay operation, a loop operation, and so on. Wherein, before establishing associated correspondences between the vehicle control instruction blocks and the controlled components of vehicle, it's necessary to know the states of the controlled components. As an example, the state of the vehicle seat includes moving in the forward, backward, left, right, up or down directions, as well as heating, massaging, and other states. However, the present invention is not limited to these. For example, it can also include expanding, contracting and other states. Therefore, during the process of establishing the associated correspondences, the first step is to modularize the controlled component and associate it with the vehicle control instruction block. Then, further associate the controlled component's states with the vehicle control instruction block's functional parameter. After the association, perform a verification test; if the test result does not meet expectations, store the vehicle control instruction block in an abnormal vehicle control instruction block database to enable direct error reporting for the next occurrence of the same vehicle control instruction block without the need for revalidation, and redesign is required; if the test result meets expectations, stores the vehicle control instruction block into an normal vehicle control instruction block database.

In the present invention, the vehicle control instruction blocks can be concatenated, and this concatenation is visualizable to the user. As an example, the vehicle control instruction blocks are designed in the form of building blocks, but the embodiments of the present invention are not limited to this and can also be designed in the form of patterns, among other possibilities. When the instruction blocks are in the form of building blocks, users can drag and stack these building blocks to concatenate multiple vehicle control instruction blocks thereby achieving coordinated control of multiple controlled components of the vehicle. Furthermore, after the vehicle control instruction blocks are concatenated, they can further be splitted. The user can split the concatenated vehicle control instruction blocks into multiple vehicle control instruction blocks.

To be more specific, when a vehicle control instruction block is selected by the user for performing concatenating control, in response to the concatenating instruction for the vehicle control instruction block, check whether the vehicle control instruction block has the concatenatable attribute; if it has, perform the concatenating operation of the vehicle control instruction block; when a vehicle control instruction block is selected by the user for performing splitting control, in response to the spliting instruction for the vehicle control instruction block, check whether the vehicle control instruction block has the splittable attribute; if it has, perform the splitting operation of the vehicle control instruction block.

It's understandable that if the vehicle control instruction block doesn't have the concatenatable attribute or the spilttable attribute, there is no need for further operations.

Here, in a case where the operational instruction includes the concatenating instruction, and a first vehicle control instruction block and a second vehicle control instruction block have the concatenatable attribute;
the process of performing a control operation of the vehicle control instruction block corresponding to the operational instruction includes:
providing a ready-to-concatenate prompt when the first vehicle control instruction block and the second vehicle control instruction block meet the vehicle control instruction block control condition; and
concatenating the first vehicle control instruction block and the second vehicle control instruction block into a third vehicle control instruction block when a state of the first vehicle control instruction block is changed from a selected state to an unselected state.

Here, the first vehicle control instruction block includes at least one vehicle control instruction block, that is to say, the first vehicle control instruction block may be a single vehicle control instruction block or a concatenated vehicle control instruction block obtained by concatenating multiple vehicle control instruction blocks. Likewise, the second vehicle control instruction block includes at least one vehicle control instruction block, that is to say, the second vehicle control instruction block may be a single vehicle control instruction block or a concatenated vehicle control instruction block obtained by concatenating multiple vehicle control instruction blocks. The third vehicle control instruction block includes at least two vehicle control instruction blocks.

To be more specific, the present embodiment provides a ready-to-concatenate prompt when the first vehicle control instruction block and the second vehicle control instruction block meet the preset concatenation condition, and concatenates the first vehicle control instruction block and the second vehicle control instruction block only after the user cancels the selection of the first vehicle control instruction block. This allows the user to understand whether the vehicle control instruction blocks meet the concatenation condition and decide whether or not to cancel the concatenation, enhancing the user experience. Wherein, the ready-to-concatenate prompt can be provided through highlighting or in text form.

Optionally, the method further includes:
providing the prompt at a concatenation point of the third vehicle control instruction block; wherein color or spacing or other forms can be used for the prompt.

It should be noted that, the concatenatable attribute includes a forward concatenatable attribute (meaning the vehicle control instruction block can be concatenated in the front), a backward concatenatable attribute (meaning the vehicle control instruction block can be concatenated at the back) and a forward-and-backward concatenatable attribute (meaning the vehicle control instruction block can be concatenated both in the front and at the back).

Preferably, in the process of concatenating, the concatenation condition includes: a distance between the vehicle control instruction blocks is less than or equal to a preset distance, or meets a backend recommended condition.

As an example, the user adds a vehicle control instruction block 1 and a vehicle control instruction block 2 on an edit page, the vehicle control instruction block 1 has the backward concatenatable attribute or the forward-and-backward concatenatable attribute. The user selects the vehicle control instruction block 1 and if the user drags the vehicle control instruction block 1 closer to the vehicle control instruction block 2 from above and the vehicle control instruction block 2 has the forward concatenatable attribute, then when the distance between them is less than or equal to the preset distance, it is determined that they are in the ready-to-concatenate state, and the vehicle control instruction block 1 is concatenated automatically with the vehicle control instruction block 2, forming a concatenated vehicle control instruction block of "vehicle control instruction block 1 + vehicle control instruction block 2". In addition, if the user drags the vehicle control instruction block 1 closer to the vehicle control instruction block 2 from below, since the vehicle control instruction block 2 doesn't have the backward concatenatable attribute, they cannot be concatenated at this time. Alternatively, the user selects a vehicle control instruction block 3 for controlling a left front door, this time the backend provides the user with a vehicle control instruction block 4 for opening a right front door, which is highly likely to be concatenated with based on a prediction. Then the vehicle control instruction block 4 is concatenated with the vehicle control instruction block 3, forming a concatenated vehicle control instruction of "vehicle control instruction block 3 + vehicle control instruction block 4".

As another example, the user adds a concatenated vehicle control instruction block 5 and a vehicle control instruction block 6 on an edit page, the concatenated vehicle control instruction block 5 has the forward-and-backward concatenatable attribute. The user selects the concatenated vehicle control instruction block 5, and if the user drags the concatenated vehicle control instruction block 5 closer to the vehicle control instruction block 6 from above and if the vehicle control instruction block 6 has the forward concatenatable attribute, then when the distance between them is less than or equal to the preset distance, it is determined that they are in the ready-to-concatenate state, and the concatenated vehicle control instruction block 5 is concatenated automatically with the vehicle control instruction block 6, forming a concatenated vehicle control instruction block of "concatenated vehicle control instruction block 5 + vehicle control instruction block 6". In addition, since the vehicle control instruction block 6 doesn't have the backward concatenatable attribute, it's impossible to form the concatenated vehicle control instruction of "vehicle control instruction block 6 + concatenated vehicle control instruction block 5" at this time. Likewise, if the vehicle control instruction block 6 has the backward concatenatable attribute, it can be concatenated with the concatenated vehicle control instruction block 5, forming a concatenated vehicle control instruction of "vehicle control instruction block 6 + concatenated vehicle control instruction block 5", but it is impossible to form a concatenated vehicle control instruction block of "concatenated vehicle control instruction block 5 + vehicle control instruction block 6". If the vehicle control instruction block 5 has the forward-and-backward concatenatable attribute, and if the user drags the concatenated vehicle control instruction block 5 closer to the vehicle control instruction block 6 from above, then when the distance between them is less than or equal to the preset distance, it is determined that they are in the ready-to-concatenate state, and the concantenated vehicle control instruction block 5 is concatenated automatically with the vehicle control instruction block 6, forming a concatenated vehicle control instruction block of "concatenated vehicle control instruction block 5 + vehicle control instruction block 6". If the user drags the concatenated vehicle control instruction block 5 closer to the vehicle control instruction block 6 from below, then when the distance between them is less than or equal to the preset distance, it is determined that they are in the ready-to-concatenate state, and the concatenated vehicle control instruction block 5 is concatenated automatically with the vehicle control instruction block 6, forming a concatenated vehicle control instruction block of "vehicle control instruction block 6 + concatenated vehicle control instruction block 5".

It should be noted that, if there are multiple second vehicle control instruction blocks around the first vehicle control instruction block, the second vehicle control instruction block having the minimum distance will be chosen to be concatenated with when the distances meet the concatenation condition.

As an example, the user adds a vehicle control instruction block 5, a vehicle control instruction block 6 and a vehicle control instruction block 7 on an edit page. All three of them have the forward-and-backward concatenatable attribute. The user selects the vehicle control instruction block 5 and drags the vehicle control instruction block 5 closer to the vehicle control instruction block 6 and the vehicle control instruction block 7. In this case if both the distance between the vehicle control instruction block 5 and the vehicle control instruction block 6 and the distance between the vehicle control instruction block 5 and the vehicle control instruction block 7 are less than the preset distance, the two distances are need to be further compared and then the vehicle control instruction block 5 is concatenated with the vehicle control instruction block having the smaller distance.

The present embodiment provides users with vehicle control instruction blocks, allowing users to visually program vehicle control instructions, reducing the entry barrier for users to control a vehicle through programming, decreasing the complexity for users to write vehicle control instructions, and enhancing the efficiency for users to edit vehicle control instructions. Meanwhile, the vehicle control instruction blocks have the concatenatable attribute, which means they can be concatenated into a concatenated vehicle control instruction block, achieving coordinated control of the controlled components of the vehicle. Moreover, the concatenated vehicle control instruction block is easy for user to understand and modify as a whole, further enhancing the efficiency of writing vehicle control instructions for users. In addition, the vehicle control instruction blocks also have the splittable attribute. The vehicle control instruction block can be splitted, making it easy to modify the vehicle control instruction block, further enhancing the efficiency of writing vehicle control instructions for users.

In a preferred embodiment, the control method further includes:
controlling the second vehicle control instruction block to move along with the first vehicle control instruction block when the first vehicle control instruction block within the third vehicle control instruction block is selected to move; wherein, in the third vehicle control instruction block, the first vehicle control instruction block is a front vehicle control instruction block, the second vehicle control instruction block is a back vehicle control instruction block.

To be more specific, after concatenating to form the third vehicle control instruction block, due to the fact that the first vehicle control instruction block is the front vehicle control instruction block within the third vehicle control instruction block, the first vehicle control instruction block can drive the second vehicle control instruction block to move together. In other words, when the user selects the front control instruction block to move, the entire third vehicle control instruction block moves as a whole.

In this embodiment, by dragging the front vehicle control instruction block within the concatenated vehicle control instruction block, the concatenated vehicle control instruction block can be moved as a whole, avoiding the need to drag each control instruction block individually, further enhancing the efficiency of editing vehicle control instructions for users.

As an improvement of the above-mentioned embodiment, the control method further includes:
splitting the third vehicle control instruction block into the first vehicle control instruction block and the second vehicle control instruction block when the second vehicle control instruction block within the third vehicle control instruction block is selected to move, and controlling the second vehicle control instruction block to move separately.

To be more specific, after concatenating to form the third vehicle control instruction block, due to the fact that the second vehicle control instruction block is the back vehicle control instruction block within the third vehicle control instruction block, so it can not drive the front vehicle control instruction block to move together, but to move separately. Nevertheless, dragging the second vehicle control instruction block can split the third vehicle control instruction block into the first vehicle control instruction block and the second vehicle control instruction block, so as to remove the concatenation state between the two.

In this embodiment, dragging the back vehicle control instruction block within the concatenated vehicle control instruction block can split the concatenated vehicle control instruction block, making it convenient to modify, add, or delete vehicle control instruction block.

In a preferred embodiment, the control method further includes:
receiving, by the vehicle-mounted control system, a first execution time point of the first vehicle control instruction block and a second execution time point of the second vehicle control instruction block within the third vehicle control instruction block; converting the first vehicle control instruction block into a first vehicle control instruction fragment and converting the second vehicle control instruction block into a second vehicle control instruction fragment, concatenating the first vehicle control instruction fragment and the second vehicle control instruction fragment in a sequential order based on a sequential execution order of the first execution time point and the second execution time point to obtain the vehicle control instruction.

It should be noted that, in the present invention, the vehicle control instruction block doesn't directly control the controlled components of vehicle. It first needs to be converted into a vehicle control instruction that is readable to the vehicle according to a preset conversion protocol, then the vehicle control instruction that is readable to the vehicle is used to control the controlled components of the vehicle.

To be more specific, in this embodiment, when editing the vehicle control instruction blocks, two modes are provided for users, including a default mode and a timeline mode.

In the default mode, the user does not need to set an execution time point for each of the vehicle control instruction blocks. During conversion, simply by converting each of the vehicle control instruction blocks into a corresponding vehicle control instruction fragment and by sequentially concatenating the vehicle control instruction fragments according to the sequential concatenation order of the respective vehicle control instruction blocks within the concatenated vehicle control instruction block, the complete vehicle control instruction can be obtained.

In the timeline mode, the user needs to set an execution time point for each of the vehicle control instruction block. If not set, the execution time point defaults to the initial timing, and the user is prompted accordingly. During conversion, the execution time points of respective vehicle control instruction blocks are received and sorted on the timeline. Then by converting each of the vehicle control instruction blocks into a corresponding vehicle control instruction fragment and by sequentially concatenating the vehicle control instruction fragments according to the sequential order of the execution time points on the timeline, the complete vehicle control instruction can be obtained.

The present embodiment set execution time points for the vehicle control instruction blocks, allowing for automatic vehicle control at predefined execution time points, meeting various user needs for vehicle control, and enhancing the user's vehicle experience.

In a preferred embodiment, the control method further includes:
receiving, by the vehicle-mounted control system, a first execution time point of the first vehicle control instruction block and a second execution time point of the second vehicle control instruction block within the third vehicle control instruction block; converting the first vehicle control instruction block into a first vehicle control instruction fragment and converting the second vehicle control instruction block into a second vehicle control instruction fragment, concatenating the first vehicle control instruction fragment and the second vehicle control instruction fragment in a reverse order based on a sequential execution order of the first execution time point and the second execution time point to obtain the vehicle control instruction.

In a preferred embodiment, the control method further includes:
receiving, by the vehicle-mounted control system, the first vehicle control instruction block and the second vehicle control instruction block within the third vehicle control instruction block, converting the first vehicle control instruction block into a first vehicle control instruction fragment and converting the second vehicle control instruction block into a second vehicle control instruction fragment, concatenating the first vehicle control instruction fragment and the second vehicle control instruction fragment in a random order to obtain the vehicle control instruction.

In addition to forward vehicle control based on the sequential execution order of the execution time points, the present invention also allows for reverse or random vehicle control, enhancing the enjoyment of vehicle control.

In a preferred embodiment, the control method further includes:
receiving, by the vehicle-mounted control system, a first execution time point of the first vehicle control instruction block and a second execution time point of the second vehicle control instruction block within the third vehicle control instruction block; converting the first vehicle control instruction block into a first simulation operational instruction fragment and converting the second vehicle control instruction block into a second simulation operational instruction fragment, concatenating the first simulation operational instruction fragment and the second simulation operational instruction fragment in a sequential order based on a sequential execution order of the first execution time point and the second execution time point to obtain the simulation operational instruction, and rendering the simulation operational instruction through a preset vehicle model to obtain a rendering result, and then presenting the rendering result.

In a preferred embodiment, the control method further includes:
receiving, by the vehicle-mounted control system, a first execution time point of the first vehicle control instruction block and a second execution time point of the second vehicle control instruction block within the third vehicle control instruction block; converting the first vehicle control instruction block into a first simulation operational instruction fragment and converting the second vehicle control instruction block into a second simulation operational instruction fragment, concatenating the first simulation operational instruction fragment and the second simulation operational instruction fragment in a reverse order based on a sequential execution order of the first execution time point and the second execution time point to obtain the simulation operational instruction, and rendering the simulation operational instruction through a preset vehicle model to obtain a rendering result, and then presenting the rendering result.

In a preferred embodiment, the control method further includes:
receiving, by the vehicle-mounted control system, the first vehicle control instruction block and the second vehicle control instruction block within the third vehicle control instruction block, converting the first vehicle control instruction block into a first simulation operational instruction fragment and converting the second vehicle control instruction block into a second simulation operational instruction fragment; concatenating the first simulation operational instruction fragment and the second simulation operational instruction fragment in a random order to obtain the simulation operational instruction, and rendering the simulation operational instruction through a preset vehicle model to obtain a rendering result, and then presenting the rendering result.

In the present invention, the actual control effects of the vehicle control instruction block can be presented through the vehicle model, enabling users to gain advance insight into the actual control effects of the vehicle control instruction block so that they can make additions, deletions, and/or modifications accordingly.

In a preferred embodiment, the control method further includes:
during converting the third vehicle control instruction block, skipping, by the vehicle-mounted control system, the conversion of the first vehicle control instruction block if the first vehicle control instruction block has a disabled attribute, skipping the conversion of the second vehicle control instruction block if the second vehicle control instruction block has a disabled attribute.

To be more specific, the user can set the disabled attribute for each of the vehicle control instruction blocks. Once the disabled attribute is set, no matter the conversion is for the vehicle control instruction or the simulation operational instruction, the disabled vehicle control instruction block is excluded from the conversion and is skipped by default. Users can also revoke the disabled attribute.

In the present embodiment, by setting and revoking the disabled attribute, the user can observe the control effects of the vehicle control instruction block through the vehicle model. If the user believes that the control effects is better when a certain one of a certain number of the vehicle control instruction blocks are disabled, he can remove the vehicle control instruction block(s) from the concatenated vehicle control instruction block. If he believes that the effects is better when the block(s) are not disabled, he may keep them.

In a preferred embodiment, the control method further includes:
receiving a functional parameter of a newly created vehicle control instruction block in response to a request for creating a new vehicle control instruction block, and verifying the functional parameter of the newly created vehicle control instruction block, and storing the newly created vehicle control instruction block when the verification is passed.

Here, the functional parameter is used to indicate a function of the newly created vehicle control instruction block, such as an execution action, a determination, a delay, etc. of the controlled components of the vehicle.

When verifying the newly created vehicle control instruction block, it mainly involves verifying whether there is conflict between the newly created vehicle control instruction block and an existing vehicle control instruction block. For example, whether there is already an identical vehicle control instruction block, etc.

In the present embodiment, users can create new vehicle control instruction blocks according to their different usage habits, meeting users' usage needs.

In a preferred embodiment, the control method further includes:
receiving a user-selected to-be-deleted vehicle control instruction block in response to a request for deleting a vehicle control instruction block, and deleting the to-be-deleted vehicle control instruction block.

Here, before deleting, the user may be prompted about a function implemented by that vehicle control instruction block so as to help the user create a new vehicle control instruction block or cancel the deletion. Furthermore, after the deletion, the to-be-deleted vehicle control instruction block may be retained in a recycle bin.

In the present embodiment, users can delete vehicle control instruction blocks according to their different usage habits, meeting users' usage needs.

In a preferred embodiment, the control method further includes:
receiving a new name of a renamed vehicle control instruction block in response to a request for renaming a vehicle control instruction block, and checking whether the new name already exists; if it does, providing a prompt; if it doesn't, updating the name of the renamed vehicle control instruction block.

Here, in the process of renaming, the present embodiment further provides multiple languages, multiple fonts, multiple styles, multiple font sizes, and multiple font colors, and offers a preview, but the present invention is not limited thereto.

In the present embodiment, users can rename the vehicle control instruction blocks according to their different usage habits, meeting users' usage needs.

In a preferred embodiment, the process of converting the instruction block combination into a vehicle control instruction based on a preset first conversion relationship, specifically includes:
extracting each instruction block from the instruction block combination, converting each of the instruction blocks into a vehicle control instruction fragment according to the preset first conversion relationship, concatenating all the vehicle control instruction fragments to obtain the vehicle control instruction.

To be more specific, each of the instruction blocks can be converted into a vehicle control instruction fragment according to the preset conversion protocol, but each of the instruction blocks needs to be translated separately. Therefore, when translating the instruction block combination, the first step is to separate each instruction block within the instruction block combination, convert each of the instruction blocks into a corresponding vehicle control instruction fragment according to the preset conversion protocol, and then concatenate all the vehicle control instruction fragments to obtain the complete vehicle control instruction.

Here, the preset first conversion relationship includes:
extracting each instruction block one by one according to a sequential combination order of the instruction blocks within the instruction block combination;
concatenating all the vehicle control instruction fragments one by one according to the sequential combination order.

Alternatively, the preset first conversion relationship includes:
extracting each instruction block one by one according to a sequential order of execution timings of the instruction blocks within the instruction block combination;
concatenating all the vehicle control instruction fragments one by one according to the sequential order of execution timings.

It should be noted that, when combining instruction blocks, the user may further set an execution timing for each of the instruction blocks. As an example, when editing the instruction block, the user may select a default mode or a timeline mode. In the default mode, there is no need to set the execution timing for each of the instruction blocks. All the instruction blocks' execution timings are the initial timing (except for those instruction blocks with a delay). In the timeline mode, it is necessary to set an execution timing for each of the instruction blocks, or the execution defaults to the initial timing (except for those instruction blocks with a delay).

When translating an instruction block combination, the first step is to check the editing mode. If it is the default mode, extract each instruction block one by one according to a sequential combination order of the instruction blocks within the instruction block combination, and translate each of instruction blocks into a corresponding vehicle control instruction fragment, and then sequentially concatenate all the vehicle control instruction fragments according to the sequential combination order to obtain a complete vehicle control instruction. If it is the timeline mode, extract each instruction block one by one according to a sequential order of the execution timings of the instruction block within the instruction block combination, wherein if a certain instruction block is not set with an execution timing, prompt the user to set it, and inform that the execution will default to the initial timing if not set; then translate them into corresponding vehicle control instruction fragments, and then sequentially concatenate all the vehicle control instruction fragments according to the sequential order of the execution timings to obtain the complete vehicle instruction.

As an example, in the default mode, the instruction block combination is composed by sequentially concatenating an instruction block 1, an instruction block 2, and an instruction block 3. Wherein an object controlled by the instruction block 1 is a vehicle door, more specifically, "open the left top wing door" is selected, an object controlled by the instruction block 2 is a vehicle light, more specifically, "turn on the left front vehicle light" is selected, an object controlled by the instruction block 3 is a seat, more specifically, "move the left back seat 5cm backward" is selected. In this case, the first step is to extract the instruction block 1, the instruction block 2, and the instruction block 3 one by one, and sort the three instruction blocks in a sequential combination order, then generate corresponding code fragments for each instruction block one by one according to a preset conversion protocol, that is to say, generate a code fragment 1 corresponding to opening the left top wing door, a code fragment 2 corresponding to turning on the left front vehicle light, and a code fragment 3 corresponding to moving the left back seat 5cm backward, and finally sequentially concatenate all the code fragment 1, the code fragment 2, and the code fragment 3 to obtain a complete vehicle control instruction. In the timeline mode, the instruction block combination is still composed by sequentially concatenating the instruction block 1, the instruction block 2, and the instruction block 3, but the execution timing of the instruction block 1 is at 5s, the execution timing of the instruction block 2 is at 0s, the execution timing of the instruction block 3 is at 3s. In this case, the first step is to sequentially extract the instruction block 2, the instruction block 3, and the instruction block 1, and sort them, then generate corresponding code fragments for each instruction block one by one according to a preset conversion protocol, that is to say, generate a code fragment 2 corresponding to turning on the left front vehicle light when the execution timing is at 0s, a code fragment 3 corresponding to moving the left back seat 5cm backward when the execution timing is at 3s, and a code fragment 1 corresponding to opening the left top wing door when the execution timing is at 5s, and finally sequentially concatenate the code fragment 2, the code fragment 3, and the code fragment 1 to obtain a complete vehicle control instruction.

In this embodiment, users are provided with various modes to choose from when editing the instruction block combination. This can meet the diverse creative needs of users and further enhances the intelligent level of vehicle control and the user experience.

In a preferred embodiment, the control method further includes:
checking whether there is an error during the execution of the vehicle control instruction;
if there is an error, identifying the error and providing a prompt;

As an example, in the default mode, since every instruction block has the same execution timing (except for those instruction blocks with a delay), in other words, under the instruction of the instruction block, the controlled component may need to execute multiple operations at the same timing, in this case it's necessary to check whether there is an error in the actions to be executed by the same controlled component at the same timing. For example, if the vehicle door need to be opened and closed at the same timing, it shows that there is an error in the actions to be executed and an error prompt will be provided, prompting the user to make corrections. Likewise, in the timeline mode, it is also necessary to check whether there is an error in the actions to be executed by the same controlled component at the same timing. If there is an error, an error prompt will be provided, prompting the user to make corrections.

In a preferred embodiment, the control method further includes:
loading, by the vehicle-mounted control system, the vehicle control instruction into a local process of the vehicle-mounted control system.

In a preferred embodiment, the control method further includes:
receiving, by the vehicle-mounted control system, device state information and environment information of a controlled component of the vehicle;
controlling the controlled component of the vehicle according to the vehicle control instruction when the device state information and the environment information are normal information.

To be more specific, before performing the corresponding vehicle control, it is necessary to receive the device state information and the environmental information of the controlled components of the vehicle, and check whether both of them are normal information. When both of them are normal information, the controlled components of the vehicle are controlled accordingly according to the vehicle control instructions. If there is abnormal information in either of them, a prompt is provided.

As an example, if there is a need to control the vehicle door to open, but the door lock mechanism of the vehicle door is in a locked state, and the vehicle control system cannot autonomously unlock this locked state, in this case it is determined that the device state information of the vehicle door is abnormal information, and a prompt is provided. As another example, in a case where there is a need to control the vehicle door to open, but it is detected that the vehicle door will encounter an obstacle when opening, in this case it is determined that the environment information of the vehicle door is abnormal information, and a prompt is provided. Corresponding control is performed to the vehicle door only when both the received device state information and environment information of the vehicle door are normal information (means they won't interfere with the proper execution of the vehicle control instruction).

In a preferred embodiment, the control method further includes:
receiving, by the vehicle-mounted control system, an operating state of the controlled component of the vehicle;
pushing vehicle control instruction error information when the operating state does not meet a target operating state indicated by the instruction block combination.

To be more specific, after controlling the controlled component of the vehicle accordingly, the present embodiment further receives the operating state of the controlled component of the vehicle, and checks whether it achieves the target operating state indicated by the instruction block combination. If the operating state doesn't achieve the target operating state indicated by the instruction block combination, vehicle control instruction error information is pushed.

As an example, when there is a need to control the air conditioner, the operating temperature of the air conditioner indicated by the instruction block combination is 18 °C, but after the execution of the vehicle control instruction, it is detected that the operating temperature of the air conditioner is 26°C, this shows that the operating temperature of the air conditioner doesn't achieve the target operating temperature indicated by the instruction block combination, which means there is an error in the vehicle control instruction, and thus an a vehicle control instruction error information is pushed. When it is pushed to the user, the user can reset the operating temperature or re-choose the instruction block combination. When it is pushed to the administrator, the administrator can promptly identify the issue and restore it.

In a preferred embodiment, the control method further includes:
converting, by the vehicle-mounted control system, the instruction block combination into a simulation operational instruction according to a preset second conversion relationship;
loading, by the vehicle-mounted control system, the simulation operational instruction into a local process of the vehicle-mounted control system, and rendering the simulation operational instruction using a preset vehicle model to obtain a rendering result; and
presenting the rendering result.

It should be noted that, in the present embodiment, the instruction block combination can not only be converted into a vehicle control instruction, but also be translated into a simulation operational instruction. The predefined vehicle model may be invoked through an API interface. By rendering the simulation operational instruction through the vehicle model, an effect animation and/or an effect image corresponding to the instruction block combination is obtained and presented on a display page of the vehicle control system.

As an example, the user selects an instruction block combination, and uses that instruction block combination to control the vehicle. The instruction block combination is converted into a vehicle control instruction and a simulation operational instruction synchronously. During the execution of the vehicle control instruction, its control effect is presented through the vehicle model on the display page of the vehicle control system.

As another example, the instruction block combination includes: an instruction block 4 instructing a vehicle 1 to display a seconds countdown timer by means of projection through an ISD intellectual interaction system, and an instruction block 5 instructing a vehicle 2 to display a marriage proposal video by means of projection through an ISD intellectual interaction system, wherein the execution time of the instruction block 5 is after the one of the instruction block 4 (for example, the execution timing of the instruction block 4 is at 0s, its total execution time is 10s, then the execution timing of the instruction block 5 is after 10s). At this moment, the instruction block 4, the instruction block 5 are converted into a simulation operational instruction, following this, a vehicle model is rendered resulting in a presentation animation where there are two vehicles, one projecting a seconds countdown timer and the other projecting a marriage proposal video after the countdown ends.

As another example, the user selects an instruction block combination, but he doesn't want to directly use that instruction block combination to control the vehicle, and instead he wants to observe its control effect first. In this case, the instruction block combination is first converted into the simulation operational instruction, its control effect is presented through the vehicle model on the display interface. Then if the user is satisfied with the control effect, he can proceed to convert the instruction block combination into a vehicle control instruction to control the vehicle (it's understandable that, at this point, the display page can either be presented synchronously or be canceled).

In the present embodiment, users are provided with an real-time visual presentation of the rendering effects of instruction blocks through a vehicle model, facilitating the users in observing the actual control effects of the instruction block combination and making adjustments to their programming accordingly, further enhancing the intelligent level of vehicle control and enhancing the user experience.

In a preferred embodiment, the process of converting, by the vehicle-mounted control system, the instruction block combination into a simulation operational instruction according to a preset second conversion relationship, specifically includes:
extracting each instruction block from the instruction block combination, converting each of the instruction blocks into a simulation operational instruction fragment according to the preset second conversion relationship, concatenating all the simulation operational instruction fragments to obtain the simulation operational instruction.

It should be noted that, similar to the vehicle control instruction, the simulation operational instruction has its own conversion protocol. The two conversion protocols operate independently and do not interfere with each other.

To be more specific, in the process of translating the instruction block combination into the simulation operational instruction, the first step is to separate each instruction block within the instruction block combination, convert each of the instruction blocks into a corresponding simulation operational instruction fragment according to the preset conversion protocol, and then concatenate all the simulation operational instruction fragments to obtain the complete simulation operational instruction.

Here, the preset second conversion relationship includes:
extracting each instruction block one by one according to a sequential combination order of the instruction blocks within the instruction block combination;
concatenating all the simulation operation instruction fragments one by one according to the sequential combination order.

Alternatively, the preset second conversion relationship includes:
extracting each instruction block one by one according to a sequential order of execution timings of the instruction blocks within the instruction block combination;
concatenating all the simulation operation instruction fragments one by one according to the sequential order of execution timings.

In a similar way as the translation of instruction block combination into the vehicle control instruction, when translating into the simulation operational instruction, the first step is to check the editing mode. If it is the default mode, extract each instruction block one by one according to a sequential combination order of the instruction blocks within the instruction block combination, and translate each of the instruction blocks into a corresponding simulation operational instruction fragment, and then sequentially concatenate all the simulation operational instruction fragments according to the sequential combination order to obtain a complete simulation operational instruction. If it is the timeline mode, extract each instruction block one by one according to a sequential order of the execution timings of the instruction blocks within the instruction block combination, wherein if a certain instruction block is not set with an execution timing, prompt the user to set it, and inform that the execution will default to the initial timing if not set; then translate each of the instruction blocks into a corresponding simulation operational instruction fragment, and then sequentially concatenate all the simulation operational instruction fragments according to the sequential order of the execution timings to obtain the complete simulation operational instruction.

In a preferred embodiment, the vehicle model is a 3D vehicle model.

Here, the 3D vehicle model includes an inside-vehicle 3D model and an outside-vehicle 3D model. The inside-vehicle 3D model presents the control effects that can be observed from inside the vehicle. The outside-vehicle 3D model presents the control effects that can be observed from outside the vehicle. The inside-vehicle 3D model and the outside-vehicle 3D model may present the control effect synchronously.

In a preferred embodiment, the control method further includes:
pushing simulation operational instruction error information when the rendering result does not meet an expected rendering result indicated by the instruction block combination.

To be more specific, after rendering the simulation operational instruction through the 3D vehicle model, a rendering result is obtained. This rendering result presents the states of the respective components of the 3D vehicle model after the execution of the simulation operational instruction. By comparing this rendering result with the expected rendering result indicated by the instruction block combination, it is possible to determine whether there is an error in the simulation operational instruction.

As an example, the expected rendering result indicated by the instruction block combination requires the left front door, right front door, left back door and the right back door are opened, but in the final obtained rendering result, only the left front door and the right front door are opened, this indicates that the simulation operational instruction involves an error, simulation operational instruction error information will be pushed. When the information is pushed to the user, the user can perform a reset; when the information is pushed to the administrator, the administrator can promptly identify the issue and restore it.

In a preferred embodiment, the control method further includes:
adding a time progress bar to the rendering result.

To be more specific, when the rendering result is presented in the form of an animation, adding the time progress bar to the animation makes it convenient for the user to view from a specific position.

In a preferred embodiment, the control method further includes:
receiving a functional parameter of a newly created instruction block in response to a request for creating a new instruction block, and verifying the functional parameter of the newly created instruction block, and storing the newly created instruction block when the verification is passed.

Here, the process of verification mainly involves checking whether the newly created instruction block is identical to an existing instruction block.

In the present embodiment, users can create new personalized instruction blocks according to their different usage habits, further enhancing the intelligent level of vehicle control and enhancing the user experience.

In a preferred embodiment, the control method further includes:
receiving a new name of a renamed instruction block in response to a request for renaming an instruction block, and checking whether the new name already exists; if it does, providing a prompt; if it doesn't, updating the name of the renamed instruction block.

Here, in the process of renaming, the present embodiment further provides multiple languages, multiple fonts, multiple styles, multiple font sizes, and multiple font colors, and offers a preview, but the present invention is not limited thereto.

In the present embodiment, users can rename the instruction blocks according to their different usage habits, enhancing the user experience.

In a preferred embodiment, the control method further includes:
receiving a user-selected to-be-deleted instruction block in response to a request for deleting an instruction block, and deleting the to-be-deleted instruction block.

Here, before deleting, the user or the developer may be prompted about a function implemented by that instruction block so as to help the user or the developer to create a new instruction block or cancel the deletion. Furthermore, after the deletion, the to-be-deleted instruction block may be retained in a recycle bin.

In the present embodiment, users can delete instruction blocks according to their different usage habits, enhancing the user experience.

It should be understood that all or part of the processes in the control method for a vehicle-mounted control system of the present invention can also be achieved through computer programs instructing relevant hardware. The computer program may be stored in a computer-readable storage medium, and when the computer program is executed by the processor, the steps of the above-mentioned control method for a vehicle-mounted control system can be implemented. The computer program includes a computer program code. The computer program code may be in a form of source code, object code, an executable file or in some intermediate forms. The computer-readable medium may include any entity or apparatus capable of carrying the computer program code, a recording medium, a USB flash drive, a removable hard disk, a magnetic disk, an optical disk, a computer memory, a Read-Only Memory (ROM, Read-Only Memory), a Random Access Memory (RAM, Random Access Memory), an electrical carrier signal, a telecommunication signal, a software distribution medium, and so on. It should be noted that the content included in the computer-readable medium may be added or reduced properly according to legal requirements and patent practices of certain jurisdictions. For example, in some jurisdictions, according to their legal requirements and patent practices, the computer-readable media may not include electrical carrier signals or telecommunications signals.

Another embodiment of the present invention provides a control apparatus for a vehicle-mounted control system. For details, please refer to FIG. 2. FIG. 2 illustrates a schematic diagram of a control apparatus for a vehicle-mounted control system according to an embodiment of the present invention. The apparatus includes:
a vehicle control instruction block combination receiving module 11, configured to receive a vehicle control instruction block combination obtained through a user's operation on a vehicle control instruction block; wherein the vehicle control instruction block combination is consist of at least one vehicle control instruction block, each of the vehicle control instruction blocks includes a functional parameter and a user-set parameter;
a first converting module 12, configured to convert the vehicle control instruction block combination into a vehicle control instruction according to a preset first conversion relationship.

Yet another embodiment of the present invention provides a vehicle server, including:
a memory, configured to store a computer program;
a processor, configured to execute the computer program;
wherein, when executing the computer program, the processor implements the control method for a vehicle-mounted control system as described above.

Correspondingly, yet another embodiment of the present invention further provides a service system, the service system includes a vehicle server, a TSP, and a first vehicle end processor; wherein
the first vehicle end processor is configured to receive a vehicle control instruction block combination obtained through a user's operation on a vehicle control instruction block, convert the vehicle control instruction block combination into a vehicle control instruction according to a preset first conversion relationship, load the vehicle control instruction into a local process of a vehicle-mounted control system, upload the vehicle control instruction block combination and the vehicle control instruction to the vehicle server; wherein, the vehicle control instruction block combination is consist of at least one vehicle control instruction block, each of the vehicle control instruction blocks includes a functional parameter and a user-set parameter;
the vehicle server is configured to receive the vehicle control instruction block combination and the vehicle control instruction, verify the vehicle control instruction block combination and the vehicle control instruction, and issue a verification passed result to the first vehicle end processor via the TSP when the verification is passed.

To be more specific, the vehicle server verifies the instruction block and the vehicle control instruction through the following steps:
checking whether each instruction block in the instruction block combination is a valid instruction block;
if it is, checking whether corresponding user-set parameters for each instruction block are valid parameters;
if they are, checking whether the vehicle control instruction is translated from the instruction block combination;
if it is, determining that the verification is passed.

In one of the preferred embodiments, the service system further includes a second vehicle end processor;
the vehicle server is further configured to issue the instruction block combination and the vehicle control instruction to the second vehicle end processor via the TSP when the verification is passed.

Here, the second vehicle end processor may be selected by the first vehicle end processor.

As an example, the user writes an instruction block combination for coordinated lighting actions among vehicles on the first vehicle end processor, and to achieve the coordinated control, three other vehicles are required to cooperate. The user specifies the vehicles of friends and family and uses the cloud server to issue the instruction block combination for coordinated lighting actions to their vehicles, subsequently enabling the coordinated control.

As another example, the user writes an instruction block combination for coordinated lighting actions among vehicles on the first vehicle end processor, after the user's friends and family download the instruction block combination for coordinated lighting actions, the user may select the display interfaces of the vehicles of the friends and the family, and present the control effects of the instruction block combination for coordinated lighting actions on the selected display interfaces, making it convenient for the friends and family to observe synchronously the presentation effect, and to modify or confirm the instruction block combination.

In the present embodiment, the vehicle control instruction block combination and the vehicle control instruction can be issued to other vehicles through the vehicle server, meeting various user needs, greatly enhancing the user experience.

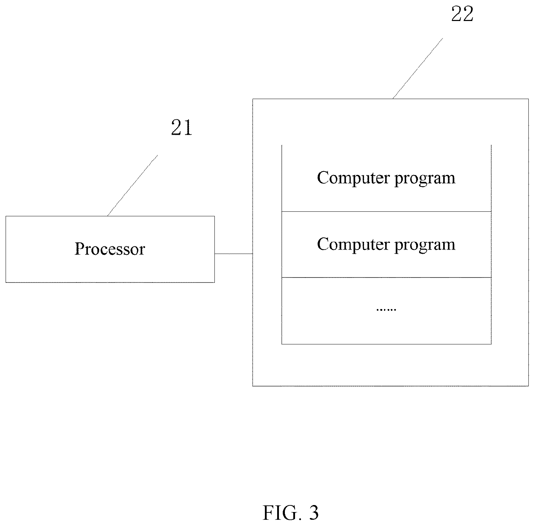

Refer to FIG. 3, which is a structural block diagram of a terminal device provided in an embodiment of the present invention. The terminal device 20 provided in the embodiments of the present invention includes a processor 21, a memory 22 and a computer program stored in the memory 22 and configured to be executed by the processor 21; when executing the computer program, the processor 21 implements the steps of the control method for a vehicle-mounted control system described in the above embodiments, such as the steps S1 to S2 shown in FIG. 1; alternatively, when executing the computer program, the processor 21 implements the functions of the respective modules described in the above apparatus embodiments, such as the vehicle control instruction block combination receiving module 11.

As an example, the computer program may be divided into one or more modules, the one or more modules are stored in the memory 22 and executed by the processor 21 to achieve the present invention. The one or more modules may be a series of computer program instruction segments capable of performing specific functions, and the instruction segments are configured to describe the execution process of the computer program on the terminal device 20. For example, the computer program may be divided into a vehicle control instruction block receiving module 11, a first converting module 12. The functions of each module are as follows.

The vehicle control instruction block combination receiving module 11 is configured to receive a vehicle control instruction block combination obtained through a user's operation on a vehicle control instruction block; wherein, the vehicle control instruction block combination is consist of at least one vehicle control instruction block, each of the vehicle control instruction blocks includes a functional parameter and a user-set parameter.

The first converting module 12 is configured to convert the vehicle control instruction block combination into a vehicle control instruction according to a preset first conversion relationship.

The terminal device 20 may include, but is not limited to, the processor 21, the memory 22. Those skilled in the art can understand that the schematic diagram is merely an example of the terminal device and does not limit the terminal device 20. More or fewer components than shown in the diagram, a combination of certain components, or different components may be included. For example, the terminal device 20 may also include an input/output device, a network access device, a bus, and so on.

The processor 21 may be a Central Processing Unit (CPU, Central Processing Unit), or it may be another general-purpose processor, a Digital Signal Processor (DSP, Digital Signal Processor), an Application Specific Integrated Circuit (ASIC, Application Specific Integrated Circuit), a Field-Programmable Gate Array (FPGA, Field-Programmable Gate Array), or other programmable logic devices, discrete gates or transistor logic devices, discrete hardware components, and the like. The general-purpose processor may be a microprocessor. Alternatively, the processor may be any conventional processor, and so son. The processor 21 is the control center of the terminal device 20 and connects various parts of the terminal device 20 using various interfaces and lines.

The memory 22 is configured to store the computer program and/or modules. The processor 21 runs or executes the computer program and/or modules stored in the memory 22, and calls data stored in the memory 22 to implement various functions of the terminal device 20. The memory 22 mainly includes a program storage area and a data storage area. The program storage area may store an operating system, an application program required by at least one function (such as a voice play function or an image play function), and the like. The data storage area may store data (such as audio data or an address book) that is created based on use of the mobile phone, and the like. In addition, the memory 22 may include a high-speed random access memory, and may further include a nonvolatile memory, for example, hard disk, memory, plug-in hard drive, Smart Media Card (SMC, Smart Media Card ), Secure Digital (SD, Secure Digital) card, flash card, at least one magnetic disk storage device, a flash storage device, or another volatile solid-state storage device.

Here, if the modules integrated in the terminal device 20 are implemented as software functional units and sold or used as independent products, they may be stored on a computer-readable storage medium. Based on this understanding, all or part of the processes of the methods of above-mentioned embodiments can also be achieved through computer programs instructing relevant hardware. The computer program may be stored in a computer-readable storage medium, and when the computer program is executed by the processor, the steps of various method embodiments can be implemented. The computer program includes a computer program code. The computer program code may be in a form of source code, object code, an executable file or in some intermediate forms, etc. The computer-readable medium may include any entity or apparatus capable of carrying the computer program code, a recording medium, a USB flash drive, a removable hard disk, a magnetic disk, an optical disk, a computer memory, a Read-Only Memory (ROM, Read-Only Memory), a Random Access Memory (RAM, Random Access Memory), an electrical carrier signal, a telecommunication signal, a software distribution medium, and so on.

Those skilled in the art should understand that the implementation of all or part of the processes of the methods of the above embodiments may be achieved through a computer program instructing the relevant hardware. The program may be stored in a computer-readable storage medium, and when the program runs, the process of various method embodiments described above can be implemented. The storage medium may be a disk, a CD, a Read-Only Memory (ROM, Read-Only Memory), or a Random Access Memory (RAM, Random Access Memory), and so on.

Furthermore, an embodiment of the present invention provides a vehicle, the vehicle includes the terminal device as described above.

Correspondingly, an embodiment of the present invention provide a computer-readable storage medium, the computer-readable storage medium includes a stored computer program, wherein when the computer program runs, a device in which the computer-readable storage medium is located is controlled to execute steps of the control method for a vehicle-mounted control system of the above embodiments, such as the steps S1-S2 shown in FIG. 1.

Compared with the prior art, the beneficial effects of the embodiments of the present invention include at least one of the following points.
(1) Provide users with instruction blocks, enabling the users to visually program the vehicle control instruction. By dragging and combining these instruction blocks, users can create a complete vehicle control instruction, reducing the difficulty for users to control the vehicle through independent programming and thus lowering the entry barrier for users to control the vehicle through programming. This not only enhances the user experience but also enhances the adaptability of vehicle. Moreover, users can create the instruction block combination based on their individual needs or usage habits, allowing for personalized vehicle control. This not only enhances the user experience but also enhances the intelligent level of vehicle control. Meanwhile, users can program through the instruction blocks. This programming method itself is highly extensible, capable of accommodating the creative visions of different users, further advancing the intelligent level of vehicle control and the user experience.
(2) When a user needs to download a software package, the version options of the software package are provided, and after the user selects the target version, the target software package corresponding to that target version is downloaded. This improves the flexibility of version selection during software package downloads and is convenient for the user to select the version of software package to downloaded, allows the user to select the version of the software package based on his usage habits, thereby enhancing the user's vehicle experience.
(3) Receive user's operation for the vehicle control instruction blocks; and when there is an anomaly in the operation information, check its anomaly level; when the anomaly level meets the anomaly level condition, send the abnormal operation information directly to the abnormal operation information processing terminal for the developer to analyze. Automatically classify the abnormal operation information, distinguish the urgency of the abnormal operation information, and send the operation information that meets the preset anomaly level condition directly to the administrator's terminal device. This facilitates issue identification and resolution for administrators, shortening the time period for processing anomaly-related logs generated by the abnormal operation information, reducing the time and effort required for log processing, enhancing the efficiency of server processing.
(4) The vehicle control instruction blocks have the concatenatable attribute, which means they can be concatenated into a concatenated vehicle control instruction block, so as to achieve the coordinated control of the controlled components of the vehicle. Moreover, the concatenated vehicle control instruction block is convenient for users to understand and modify as a whole, further enhancing the efficiency for users to write vehicle control instructions. In addition, the vehicle control instruction blocks also have the splittable attribute, which means the vehicle control instruction block can be splitted, making it easy to modify the vehicle control instruction block, further enhancing the efficiency for users to write vehicle control instructions.

The above embodiments only represent several implementations of the present invention, their description is specific and detailed, but they should not be understood as limiting the scope of the present invention. It should be noted that for those skilled in the art, various modifications and improvements can be made without departing from the concept of the invention, these modifications and improvements should be included within the scope of the present invention. Therefore, the scope of protection of the present invention is defined by the attached claims.

## Claims

1. A control method for a vehicle-mounted control system, wherein the method comprises:
receiving, by the vehicle-mounted control system, a vehicle control instruction block combination obtained through a user's operation on a vehicle control instruction block; wherein, the vehicle control instruction block combination is consist of at least one vehicle control instruction block, each of the vehicle control instruction blocks comprises a functional parameter and a user-set parameter;
converting, by the vehicle-mounted control system, the vehicle control instruction block combination into a vehicle control instruction according to a preset first conversion relationship.

2. The control method for a vehicle-mounted control system as claimed in claim 1, wherein before the user's operation on the vehicle control instruction block, the method further comprises:
downloading, by the vehicle-mounted control system, a vehicle control instruction block software package based on OTA technology;
processing, by the vehicle-mounted control system, the vehicle control instruction block software package to obtain a number of the vehicle control instruction blocks for the user to operate.

3. The control method for a vehicle-mounted control system as claimed in claim 2, wherein the process of downloading, by the vehicle-mounted control system, a vehicle control instruction block software package based on OTA technology, specifically comprises:
sending, by the vehicle-mounted control system, a download request for the vehicle control instruction block software package to a vehicle server;
receiving, by the vehicle-mounted control system, version options for the vehicle control instruction block software package sent by the vehicle server according to the download request;
sending, by the vehicle-mounted control system, version information of a target version selected from the version options by the user to the vehicle server;
receiving, by the vehicle-mounted control system, a download address of a target vehicle control instruction block software package sent by the vehicle server according to the version information of the target version;
downloading, by the vehicle-mounted control system, the target vehicle control instruction block software package according to the download address based on OTA technology.

4. The control method for a vehicle-mounted control system as claimed in claim 3, wherein the download request comprises a device identifier of a vehicle, current version information of the vehicle control instruction block software package of the vehicle, and version authentication information corresponding to the current version information;
wherein the device identifier, the current version information, and the version authentication information corresponding to the current version information are used for the vehicle server to authenticate the download request.

5. The control method for a vehicle-mounted control system as claimed in claim 4, wherein after the process of downloading, by the vehicle-mounted control system, the target vehicle control instruction block software package according to the download address, the method further comprises:
loading, by the vehicle-mounted control system, the target vehicle control instruction block software package, updating the current version information to the version information of the target vehicle control instruction block software package, and updating the version authentication information corresponding to the current version information to the version authentication information corresponding to the target vehicle control instruction block software package.

6. The control method for a vehicle-mounted control system as claimed in claim 3, wherein in a case where a plurality of the download addresses are provided, the process of downloading, by the vehicle-mounted control system, the target vehicle control instruction block software package according to the download address, specifically comprises:
receiving, by the vehicle-mounted control system, a download speed of the target vehicle control instruction block software package at a current selected download address;
switching to a different download address to download the target vehicle control instruction block software package when there is an anomaly in the download speed.

7. The control method for a vehicle-mounted control system as claimed in claim 3, wherein the process of downloading, by the vehicle-mounted control system, the target vehicle control instruction block software package according to the download address, specifically comprises:
downloading, by the vehicle-mounted control system, all program blocks of the target vehicle control instruction block software package according to the download address and a pre-set download order of the program blocks of the target vehicle control instruction block software package.

8. The control method for a vehicle-mounted control system as claimed in claim 7, wherein the process of downloading, by the vehicle-mounted control system, all program blocks of the target vehicle control instruction block software package according to the download address and a pre-set download order of the program blocks of the target vehicle control instruction block software package, specifically comprises:
downloading, by the vehicle-mounted control system, the program block of the target vehicle control instruction block software package according to the download address and the pre-set download order of the program blocks of the target vehicle control instruction block software package and receiving a download speed of the program block;
choosing a next program block in the download order for downloading when there is an anomaly in the download speed until all the program blocks of the target vehicle control instruction block software package are downloaded.

9. The control method for a vehicle-mounted control system as claimed in claim 3, wherein the process of downloading, by the vehicle-mounted control system, the target vehicle control instruction block software package according to the download address, specifically comprises:
verifying, by the vehicle-mounted control system, validity of the download address;
downloading the target vehicle control instruction block software package when the download address is valid.

10. The control method for a vehicle-mounted control system as claimed in claim 9, wherein the target vehicle control instruction block software package is encrypted, in this case after the process of downloading, by the vehicle-mounted control system, the target vehicle control instruction block software package, the method further comprises:
decrypting, by the vehicle-mounted control system, the target vehicle control instruction block software package to obtain a decrypted target vehicle control instruction block software package;
verifying, by the vehicle-mounted control system, validity of the decrypted target vehicle control instruction block software package;
loading the decrypted target vehicle control instruction block software package when the decrypted target vehicle control instruction block software package is valid.

11. The control method for a vehicle-mounted control system as claimed in claim 1, wherein the method further comprises:
receiving, by the vehicle server, the user's operation information for the vehicle control instruction block;
storing, by the vehicle server, the operation information.

12. The control method for a vehicle-mounted control system as claimed in claim 11, wherein the process of storing, by the vehicle server, the operation information, specifically comprises:
checking, by the vehicle server, whether there is an anomaly in the operation information;
storing, by the vehicle server, the operation information on a disk as abnormal operation information if there is an anomaly in the operation information;
storing, by the vehicle server, the operation information on the disk as normal operation information if there is no anomaly in the operation information and recording a storing time.

13. The control method for a vehicle-mounted control system as claimed in claim 12, wherein after the process of storing, by the vehicle server, the operation information on a disk as abnormal operation information, the method further comprises:
checking, by the vehicle server, an anomaly level of the abnormal operation information;
sending, by the vehicle server, the abnormal operation information to an abnormal operation information processing terminal when the anomaly level meets a preset anomaly level condition.

14. The control method for a vehicle-mounted control system as claimed in claim 13, wherein the process of checking, by the vehicle server, whether there is an anomaly in the operation information, specifically comprises:
checking, by the vehicle server, whether the vehicle control instruction block is a registered valid vehicle control instruction block;
determining, by the vehicle server, that there is an anomaly in the operation information if the vehicle control instruction block is not a valid vehicle control instruction block;
checking, by the vehicle server, whether a version of the vehicle control instruction block is the current version if the vehicle control instruction block is a valid vehicle control instruction block;
determining, by the vehicle server, that there is an anomaly in the operation information if the version is not the current version;
checking, by the vehicle server, whether a parameter configured in the vehicle control instruction block exceeds a parameter threshold range if the version is the current version;
determining, by the vehicle server, that there is an anomaly in the operation information if the parameter exceeds the parameter threshold range;
determining, by the vehicle server, that there is no anomaly in the operation information if the parameter doesn't exceed the parameter threshold range.

15. The control method for a vehicle-mounted control system as claimed in claim 12, wherein the process of storing, by the vehicle server, the operation information on the disk as normal operation information if there is no anomaly in the operation information and recording a storing time, specifically comprises:
compressing, by the vehicle server, the operation information through a preset compression algorithm if there is no anomaly in the operation information;
storing, by the vehicle server, the compressed operation information on the disk as normal operation information and recording the storing time.

16. The control method for a vehicle-mounted control system as claimed in claim 12 or claim 15, wherein the method further comprises:
checking, by the vehicle server, whether a usage rate of the disk is greater than a usage rate threshold;
deleting, by the vehicle server, the normal operation information according to the storing time when the usage rate is greater than the usage rate threshold.

17. The control method for a vehicle-mounted control system as claimed in claim 13, wherein the anomaly level dynamically increases and decreases according to a frequency of occurrence of a type of the abnormal operation information.

18. The control method for a vehicle-mounted control system as claimed in claim 13, wherein the process of sending, by the vehicle server, the abnormal operation information to an abnormal operation information processing terminal, specifically comprises:
encrypting, by the vehicle server, the abnormal operation information and setting a permission level, and then sending the abnormal operation information to the abnormal operation information processing terminal.

19. The control method for a vehicle-mounted control system as claimed in claim 1, wherein the process of obtaining a vehicle control instruction block combination through a user's operation on a vehicle control instruction block, specifically comprises:
checking, by the vehicle-mounted control system, in response to a user-issued operational instruction, whether the vehicle control instruction block meets a predefined vehicle control instruction block operational condition; the vehicle control instruction block operational condition comprises: the vehicle control instruction block has a concatenatable attribute or a splittable attribute; the operational instruction comprises: a concatenating instruction or a splitting instruction;
performing a control operation of the vehicle control instruction block corresponding to the operational instruction to obtain the vehicle control instruction block combination if the vehicle control instruction block meets the operational condition; the control operation comprises accordingly: concatenating or splitting the vehicle control instruction block that meets the vehicle control instruction block operational condition.

20. The control method for a vehicle-mounted control system as claimed in claim 19, wherein in a case where the operational instruction comprises the concatenating instruction, and a first vehicle control instruction block and a second vehicle control instruction block have the concatenatable attribute;
the process of performing a control operation of the vehicle control instruction block corresponding to the operational instruction comprises:
providing a ready-to-concatenate prompt when the first vehicle control instruction block and the second vehicle control instruction block meet the vehicle control instruction block operational condition; and
concatenating the first vehicle control instruction block and the second vehicle control instruction block into a third vehicle control instruction block when a state of the first vehicle control instruction block is changed from a selected state to an unselected state.

21. The control method for a vehicle-mounted control system as claimed in claim 20, wherein the method further comprises:
controlling the second vehicle control instruction block to move along with the first vehicle control instruction block when the first vehicle control instruction block within the third vehicle control instruction block is selected to move; wherein, in the third vehicle control instruction block, the first vehicle control instruction block is a front vehicle control instruction block, the second vehicle control instruction block is a back vehicle control instruction block.

22. The control method for a vehicle-mounted control system as claimed in claim 21, wherein the method further comprises:
splitting the third vehicle control instruction block into the first vehicle control instruction block and the second vehicle control instruction block when the second vehicle control instruction block within the third vehicle control instruction block is selected to move, and controlling the second vehicle control instruction block to move separately.

23. The control method for a vehicle-mounted control system as claimed in claim 20, wherein the method further comprises:
receiving, by the vehicle-mounted control system, a first execution time point of the first vehicle control instruction block and a second execution time point of the second vehicle control instruction block within the third vehicle control instruction block; converting the first vehicle control instruction block into a first vehicle control instruction fragment and converting the second vehicle control instruction block into a second vehicle control instruction fragment, concatenating the first vehicle control instruction fragment and the second vehicle control instruction fragment in a sequential order based on a sequential execution order of the first execution time point and the second execution time point to obtain the vehicle control instruction.

24. The control method for a vehicle-mounted control system as claimed in claim 20, wherein the method further comprises:
receiving, by the vehicle-mounted control system, a first execution time point of the first vehicle control instruction block and a second execution time point of the second vehicle control instruction block within the third vehicle control instruction block; converting the first vehicle control instruction block into a first vehicle control instruction fragment and converting the second vehicle control instruction block into a second vehicle control instruction fragment, concatenating the first vehicle control instruction fragment and the second vehicle control instruction fragment in a reverse order based on a sequential execution order of the first execution time point and the second execution time point to obtain the vehicle control instruction.

25. The control method for a vehicle-mounted control system as claimed in claim 20, wherein the method further comprises:
receiving, by the vehicle-mounted control system, the first vehicle control instruction block and the second vehicle control instruction block within the third vehicle control instruction block, converting the first vehicle control instruction block into a first vehicle control instruction fragment and converting the second vehicle control instruction block into a second vehicle control instruction fragment, concatenating the first vehicle control instruction fragment and the second vehicle control instruction fragment in a random order to obtain the vehicle control instruction.

26. The control method for a vehicle-mounted control system as claimed in claim 20, wherein the method further comprises:
receiving, by the vehicle-mounted control system, a first execution time point of the first vehicle control instruction block and a second execution time point of the second vehicle control instruction block within the third vehicle control instruction block; converting the first vehicle control instruction block into a first simulation operational instruction fragment and converting the second vehicle control instruction block into a second simulation operational instruction fragment, concatenating the first simulation operational instruction fragment and the second simulation operational instruction fragment in a sequential order based on a sequential execution order of the first execution time point and the second execution time point to obtain the simulation operational instruction, and rendering the simulation operational instruction through a preset vehicle model to obtain a rendering result, and then presenting the rendering result.

27. The control method for a vehicle-mounted control system as claimed in claim 20, wherein the method further comprises:
receiving, by the vehicle-mounted control system, a first execution time point of the first vehicle control instruction block and a second execution time point of the second vehicle control instruction block within the third vehicle control instruction block; converting the first vehicle control instruction block into a first simulation operational instruction fragment and converting the second vehicle control instruction block into a second simulation operational instruction fragment, concatenating the first simulation operational instruction fragment and the second simulation operational instruction fragment in a reverse order based on a sequential execution order of the first execution time point and the second execution time point to obtain the simulation operational instruction, and rendering the simulation operational instruction through a preset vehicle model to obtain a rendering result, and then presenting the rendering result.

28. The control method for a vehicle-mounted control system as claimed in claim 20, wherein the method further comprises:
receiving, by the vehicle-mounted control system, the first vehicle control instruction block and the second vehicle control instruction block within the third vehicle control instruction block, converting the first vehicle control instruction block into a first simulation operational instruction fragment and converting the second vehicle control instruction block into a second simulation operational instruction fragment; concatenating the first simulation operational instruction fragment and the second simulation operational instruction fragment in a random order to obtain the simulation operational instruction, and rendering the simulation operational instruction through a preset vehicle model to obtain a rendering result, and then presenting the rendering result.

29. The control method for a vehicle-mounted control system as claimed in any one of claims 23-28, wherein the method further comprises:
during converting the third vehicle control instruction block, skipping, by the vehicle-mounted control system, the conversion of the first vehicle control instruction block if the first vehicle control instruction block has a disabled attribute, skipping the conversion of the second vehicle control instruction block if the second vehicle control instruction block has a disabled attribute.

30. The control method for a vehicle-mounted control system as claimed in claim 1, wherein the process of converting, by the vehicle-mounted control system, the vehicle control instruction block combination into a vehicle control instruction according to a preset first conversion relationship, specifically comprises:
extracting each vehicle control instruction block from the vehicle control instruction block combination, converting each of the vehicle control instruction blocks into a vehicle control instruction fragment according to the preset first conversion relationship, concatenating all the vehicle control instruction fragments to obtain the vehicle control instruction.

31. The control method for a vehicle-mounted control system as claimed in claim 30, wherein the preset first conversion relationship comprises:
extracting each vehicle control instruction block one by one according to a sequential combination order of the vehicle control instruction blocks within the vehicle control instruction block combination;
concatenating all the vehicle control instruction fragments one by one according to the sequential combination order.

32. The control method for a vehicle-mounted control system as claimed in claim 30, wherein the preset first conversion relationship comprises:
extracting each vehicle control instruction block one by one according to a sequential order of execution timings of the vehicle control instruction blocks within the vehicle control instruction block combination;
concatenating all the vehicle control instruction fragments one by one according to the sequential order of execution timings.

33. The control method for a vehicle-mounted control system as claimed in claim 1, wherein the method further comprises:
loading, by the vehicle-mounted control system, the vehicle control instruction into a local process of the vehicle-mounted control system.

34. The control method for a vehicle-mounted control system as claimed in claim 1, wherein the method further comprises:
receiving, by the vehicle-mounted control system, device state information and environment information of a controlled component of the vehicle;
controlling the controlled component of the vehicle according to the vehicle control instruction when the device state information and the environment information are normal information.

35. The control method for a vehicle-mounted control system as claimed in claim 34, wherein the method further comprises:
receiving, by the vehicle-mounted control system, an operating state of the controlled component of the vehicle;
pushing vehicle control instruction error information when the operating state does not meet a target operating state indicated by the instruction block combination.

36. The control method for a vehicle-mounted control system as claimed in claim 1, wherein the method further comprises:
converting, by the vehicle-mounted control system, the instruction block combination into a simulation operational instruction according to a preset second conversion relationship;
loading, by the vehicle-mounted control system, the simulation operational instruction into a local process of the vehicle-mounted control system, and rendering the simulation operational instruction using a preset vehicle model to obtain a rendering result;
presenting the rendering result.

37. The control method for a vehicle-mounted control system as claimed in claim 36, wherein the process of converting, by the vehicle-mounted control system, the instruction block combination into a simulation operational instruction according to a preset second conversion relationship, specifically comprises:
extracting each instruction block from the instruction block combination, converting each of the instruction blocks into a simulation operational instruction fragment according to the preset second conversion relationship, concatenating all the simulation operational instruction fragments to obtain the simulation operational instruction.

38. The control method for a vehicle-mounted control system as claimed in claim 37, wherein the preset second conversion relationship comprises:
extracting each instruction block one by one according to a sequential combination order of the instruction blocks within the instruction block combination;
concatenating all the simulation operation instruction fragments one by one according to the sequential combination order.

39. The control method for a vehicle-mounted control system as claimed in claim 37, wherein the preset second conversion relationship comprises:
extracting each instruction block one by one according to a sequential order of execution timings of the instruction blocks within the instruction block combination;
concatenating all the simulation operation instruction fragments one by one according to the sequential order of execution timings.

40. The control method for a vehicle-mounted control system as claimed in any one of claims 36~39, wherein the vehicle model is a 3D vehicle model.

41. The control method for a vehicle-mounted control system as claimed in claim 40, wherein the method further comprises:
pushing simulation operational instruction error information when the rendering result does not meet an expected rendering result indicated by the instruction block combination.

42. A control apparatus for a vehicle-mounted control system, wherein the apparatus comprises:
a vehicle control instruction block combination receiving module, configured to receive a vehicle control instruction block combination obtained through a user's operation on a vehicle control instruction block; wherein the vehicle control instruction block combination is consist of at least one vehicle control instruction block, each of the vehicle control instruction blocks comprises a functional parameter and a user-set parameter;
a first converting module, configured to convert the vehicle control instruction block combination into a vehicle control instruction according to a preset first conversion relationship.

43. A vehicle server, wherein the vehicle server comprises:
a memory, configured to store a computer program;
a processor, configured to execute the computer program;
wherein when executing the computer program, the processor implements the control method for a vehicle-mounted control system as claimed in any one of claims 3-18.

44. A service system, wherein the service system comprises a vehicle server, a TSP, and a first vehicle end processor; wherein
the first vehicle end processor is configured to receive a vehicle control instruction block combination obtained through a user's operation on a vehicle control instruction block, convert the vehicle control instruction block combination into a vehicle control instruction according to a preset first conversion relationship, load the vehicle control instruction into a local process of a vehicle-mounted control system, upload the vehicle control instruction block combination and the vehicle control instruction to the vehicle server; wherein the vehicle control instruction block combination is consist of at least one vehicle control instruction block, each of the vehicle control instruction blocks comprises a functional parameter and a user-set parameter;
the vehicle server is configured to receive the vehicle control instruction block combination and the vehicle control instruction, verify the vehicle control instruction block combination and the vehicle control instruction, and issue a verification passed result to the first vehicle end processor via the TSP when the verification is passed.

45. The service system as claimed in claim 44, wherein the service system further comprises a second vehicle end processor;
the vehicle server is further configured to issue the instruction block combination and the vehicle control instruction to the second vehicle end processor via the TSP when the verification is passed.

46. A terminal device, comprising a memory, a processor, and a computer program stored in the memory and executable on the processor; wherein when executing the computer program, the processor implements the control method for a vehicle-mounted control system as claimed in any one of claims 1-41.

47. A vehicle, wherein the vehicle comprises the terminal device as claimed in claim 46.

48. A computer-readable storage medium, wherein the computer-readable storage medium stores a computer program, wherein when the computer program runs, a device in which the computer-readable storage medium is located is controlled to perform the control method for a vehicle-mounted control system as claimed in any one of claims 1-41.
